# EUROPEAN PATENT APPLICATION

(11) **EP 3 869 721 A1**
(43) Date of publication of application: **25.08.2021**
(21) Application number: 18938025.6
(22) Date of filing: 27.10.2018
(51) Int. Cl.: H04L 5/00, H04W 72/04

(54) **SIGNAL TRANSMISSION METHOD, TRANSMITTING TERMINAL DEVICE, AND RECEIVING TERMINAL DEVICE**

(71) Applicant: GUANGDONG OPPO MOBILE TELECOMMUNICATIONS CORP., LTD., Dongguan, Guangdong 523860 (CN)
(72) Inventor: TANG, Hai, Dongguan, Guangdong 523860 (CN)
(74) Representative: Penza, Giancarlo
(86) International application number: PCT/CN2018/112271
(87) International publication number: WO 2020/082395

(57) **Abstract**

Embodiments of the present application provide a signal transmission method, a transmitting terminal device, and a receiving terminal device. The transmitting terminal device may use a small bitmap to indicate the position of an SSB actually transmitted within a transmission window of a DRS for use by the receiving terminal device to perform rate matching, etc. The method comprises: a transmitting terminal device respectively sends first indication information consisting of M1 bits and second indication information consisting of M2 bits to the receiving terminal device, the first indication information and the second indication information being used for indicating a position index of an SSB actually transmitted within a first transmission window, wherein the first transmission window comprises candidate transmission positions of Y SSBs, a maximum of X SSBs are capable of being transmitted within the first transmission window, X is a positive integer less than or equal to 8, Y is a positive integer greater than X, and M1 and M2 are positive integers.

## Description

### Technical Field

Embodiments of the present application relate to the field of communication, and more particularly, to a signal transmission method, a transmitting end device, and a receiving end device.

### Background

In a 5-Generation New Radio (5G NR) system, for frequency bands below 6 GHz, there are at most 8 indexes of Synchronization Signal/Physical Broadcast Channel blocks (SSB). A network device may inform a terminal device of specific SSB transmission positions through an 8-bit bitmap based on broadcasting. Each bit represents whether one SSB is sent or not for the terminal device to perform rate matching. For frequency bands above 6 GHz, there are at most 64 indexes of SSBs, and a network device may inform a terminal device of specific SSB transmission positions through a 16-bit bitmap based on broadcasting.

When the 5G NR system is applied to an unlicensed spectrum, many candidate SSB transmission positions may be used in a transmission window of a Discovery Reference Signal (DRS). How to indicate actual transmission positions of SSBs among these candidate SSB transmission positions is an urgent problem to be solved.

### Summary

Embodiments of the present application provide a signal transmission method, a transmitting end device and a receiving end device, wherein the transmitting end device may use a small bitmap to indicate a position of an SSB actually transmitted within a DRS transmission window for the receiving end device to perform rate matching, etc.

In a first aspect, a signal transmission method is provided, which includes that a transmitting end device sends first indication information consisting of M1 bits and second indication information consisting of M2 bits to a receiving end device, respectively. The first indication information and the second indication information are used for indicating a position index of an SSB actually transmitted within a first transmission window, herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers.

Optionally, the transmitting end device may be a network device, and the receiving end device may be a terminal device.

Optionally, when the method is applied to D2D or V2X, the transmitting end device may be a first terminal device and the receiving end device may be a second terminal device.

Optionally, the first transmission window is a discovery reference signal transmission window, which is one of at least one discovery reference signal transmission window in one discovery reference signal period.

In a second aspect, a signal transmission method is provided, which includes that a receiving end device receives first indication information consisting of M1 bits and second indication information consisting of M2 bits sent by a transmitting end device, respectively. The first indication information and the second indication information are used for indicating a position index of an SSB actually transmitted within a first transmission window, herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers; and the receiving end device determines the position index of the SSB actually transmitted within the first transmission window according to the first indication information and the second indication information, and determine a position for receiving an SSB sent by the transmitting end device.

It should be understood that the receiving end device may determine the position of the SSB sent by the transmitting end device, after determining the position index of the SSB actually transmitted within the first transmission window.

Optionally, the transmitting end device may be a network device, and the receiving end device may be a terminal device.

Optionally, when the method is applied to D2D or V2X, the transmitting end device may be a first terminal device and the receiving end device may be a second terminal device.

Optionally, the first transmission window is a discovery reference signal transmission window, which is one of at least one discovery reference signal transmission window in one discovery reference signal period.

In a third aspect, a transmitting end device is provided, which is configured to perform the method in the first aspect or various implementations thereof.

Specifically, the transmitting end device includes functional modules configured to perform the method in the first aspect.

In a fourth aspect, a receiving end device is provided, which is configured to perform the method in the second aspect or various implementations thereof.

Specifically, the receiving end device includes functional modules, configured to perform the method in the second aspect.

In a fifth aspect, a transmitting end device is provided, which includes a processor and a memory. The memory is configured to store a computer program, and the processor is configured to call and run the computer program stored in the memory to perform the method in the first aspect.

In a sixth aspect, a receiving end device is provided, which includes a processor and a memory. The memory is configured to store a computer program, and the processor is configured to call and run the computer program stored in the memory to perform the method in the second aspect.

In a seventh aspect, a chip is provided, which is configured to implement the method in any one of the first to second aspects.

Specifically, the chip includes a processor for calling and running a computer program from a memory, to enable a device mounted with the chip to perform the method in any one of the first to second aspects or various implementations thereof.

In an eighth aspect, a computer-readable storage medium is provided, which is configured to store a computer program that enables a computer to perform the method in any one of the first to second aspects.

In a ninth aspect, a computer program product is provided, which includes computer program instructions that enable a computer to perform the method in any one of the first to second aspects.

In a tenth aspect, a computer program is provided. When being run on a computer, the computer program enables the computer to perform the method in any one of the first to second aspects.

With above technical solutions, the transmitting end device may use a small bitmap to indicate a position of an SSB actually transmitted within a transmission window of a DRS for the receiving end device to perform rate matching, etc.

### Brief Description of Drawings

FIG. 1 is a schematic diagram of an architecture of a communication system according to an embodiment of the present application.
FIG. 2 is a schematic flow chart of a signal transmission method according to an embodiment of the present application.
FIG. 3 is a schematic diagram of SSB transmission according to an embodiment of the present application.
FIG. 4 is a schematic diagram of another SSB transmission according to an embodiment of the present application.
FIG. 5 is a schematic diagram of a further SSB transmission according to an embodiment of the present application.
FIG. 6 is a schematic diagram of a still further SSB transmission according to an embodiment of the present application.
FIG. 7 is a schematic diagram of a still further SSB transmission according to an embodiment of the present application.
FIG. 8 is a schematic diagram of a still further SSB transmission according to an embodiment of the present application.
FIG. 9 is a schematic diagram of a still further SSB transmission according to an embodiment of the present application.
FIG. 10 is a schematic flow chart of another signal transmission method according to an embodiment of the present application.
FIG. 11 is a schematic block diagram of a transmitting end device according to an embodiment of the present application.
FIG. 12 is a schematic block diagram of a receiving end device according to an embodiment of the present application.
FIG. 13 is a schematic block diagram of a communication device according to an embodiment of the present application.
FIG. 14 is a schematic block diagram of a chip according to an embodiment of the present application.
FIG. 15 is a schematic block diagram of a communication system according to an embodiment of the present application.

### Detailed Description

Technical solutions in embodiments of the present application will be described below with reference to the drawings in the embodiments of the present application. It is apparent that the embodiments described are just some embodiments of the present application, but not all embodiments of the present application. According to the embodiments of the present application, all other embodiments achieved by a person of ordinary skills in the art without paying an inventive effort are within the protection scope of the present application.

The embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, a LTE-based access to unlicensed spectrum (LTE-U) system, an NR-based access to unlicensed spectrum (NR-U) system, a Universal Mobile Telecommunication System (UMTS), a Wireless Local Area Network (WLAN), Wireless Fidelity (WiFi), a next-generation communication system or other communication systems, etc.

Generally speaking, a traditional communication system supports a limited quantity of connections, which is also easy to implement. However, with the development of communication technology, a mobile communication system will not only support traditional communication, but also support, for example, Device to Device (D2D) communication, Machine to Machine (M2M) communication, Machine Type Communication (MTC), Vehicle to Vehicle (V2V) communication, etc. The embodiments of the present application may also be applied to these communication systems.

Optionally, a communication system in an embodiment of the present application may be applied to a Carrier Aggregation (CA) scenario, may also be applied to a Dual Connectivity (DC) scenario, and may also be applied to a Standalone (SA) network deployment scenario.

A spectrum used is not limited in the embodiments of the present application. For example, the embodiments of the present application may be applied to a licensed spectrum, and may also be applied to an unlicensed spectrum.

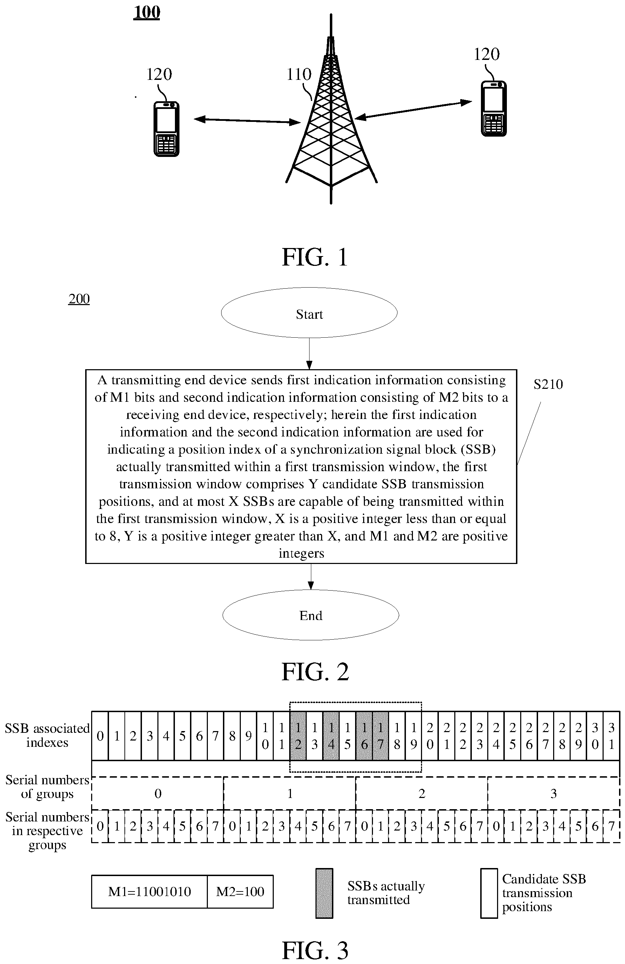

Illustratively, a communication system 100 to which an embodiment of the present application is applied as shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area.

FIG. 1 shows one network device and two terminal devices as an example. Optionally, the communication system 100 may include multiple network devices, and other quantities of terminal devices may be included within the coverage area of each network device, which is not limited in the embodiments of the present application.

Optionally, the communication system 100 may further include other network entities such as a network controller and a mobile management entity, which is not limited in the embodiments of the present application.

It should be understood that devices with communication function in a network/system may be referred to as communication devices in the embodiments of the present application. Taking the communication system 100 shown in FIG. 1 as an example, communication devices may include a network device 110 and a terminal device 120 which have communication function, and the network device 110 and the terminal device 120 may be the specific devices described above, which will not be described here again. The communication devices may also include other devices in the communication system 100, e.g., other network entities such as a network controller and a mobile management entity, which is not limited in the embodiments of the present application.

In the embodiments of the present application, each embodiment is described in connection with a terminal device and a network device. The terminal device may also be referred to a User Equipment (UE), an access terminal, a subscriber unit, a subscriber station, a mobile station, a remote platform, a remote station, a remote terminal, a mobile device, a user terminal, a terminal, a wireless communication device, a user agent, a user apparatus, etc. The terminal device may be a station (ST) in a WLAN, or may be a cellular phone, a cordless phone, a Session Initiation Protocol (SIP) phone, a Wireless Local Loop (WLL) station, a Personal Digital Assistant (PDA) device, a handheld device or a computing device with a wireless communication function, or other processing device connected to a wireless modem, a vehicle-mounted device, a wearable device, and a next generation communication system, such as a terminal device in an NR network, or a terminal device in a future evolved Public Land Mobile Network (PLMN) network, etc.

As an example but not a limitation, in the embodiments of the present application, the terminal device may also be a wearable device. A wearable device may also be referred to a wearable intelligent device, which is a general term of wearable devices developed by intelligent design of daily wear using wearing technology, e.g., glasses, gloves, watches, clothing, shoes, etc. A wearable device is a portable device that is worn directly on a body or integrated into the clothes or accessories of a user. A wearable device is not only a hardware device, but also a device capable of realizing powerful functions through software support, data interaction and cloud interaction. In a broad sense, a wearable intelligent device includes a device that is full-featured and large-sized and may realize complete or partial functions without relying on a smart phone, e.g., a smart watch, a smart glasses, etc., and a device that is only focused on a certain type of application functions and need to be used in cooperation with other device such as a smart phone, e.g., a smart bracelet, a smart jewelry, etc. for various physical signs monitoring.

A network device may be a device for communicating with a mobile device, or may be an Access Point (AP) in the WLAN, or a Base Transceiver Station (BTS) in GSM or CDMA, or may be a NodeB (NB) in WCDMA, or an Evolutional Node B (eNB or eNodeB) in LTE, or a relay station or an access point, or a vehicle-mounted device, a wearable device, a gNB in an NR network, or a network device in the future evolved PLMN network, etc.

In the embodiments of the present application, a network device provides services for a cell, and a terminal device communicates with the network device through transmission resources (e.g., frequency domain resources or spectrum resources) used by the cell. The cell may be a cell corresponding to the network device (e.g., base station), and the cell may belong to a macro base station, or a base station corresponding to a small cell. The small cell here may include: a Metro cell, a Micro cell, a Pico cell, a Femto cell, etc. These small cells have the characteristics of small coverage and low transmission power, and are suitable for providing high-speed data transmission services.

It should be understood that in the research of a 5G unlicensed spectrum, as channel sensing on an unlicensed spectrum needs to be performed based on Listen Before Talk (LBT) before using a channel for signal transmission, uncertainty of utilization time of a channel will be caused by LBT. At present, many candidate SSB transmission positions are used in a DRS transmission window in frequency bands below 7 GHz, and a corresponding problem is how to indicate an actual SSB transmission position among these candidate SSB transmission positions, for UE to perform rate matching, etc. In the present patent, by designing a specific bitmap indication mechanism, a position of an SSB actually transmitted is indicated within a DRS period using a small bitmap for a terminal device to perform rate matching, etc.

FIG. 2 is a schematic flow chart of a signal transmission method 200 according to an embodiment of the present application. As shown in FIG. 2, the method 200 may include act S210.

In act S210, a transmitting end device sends first indication information consisting of M1 bits and second indication information consisting of M2 bits to a receiving end device, respectively. The first indication information and the second indication information are used for indicating a position index of a Synchronization Signal Block (SSB) actually transmitted within a first transmission window. Herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers.

Optionally, when the method is applied to a communication system as shown in FIG. 1, the transmitting end device may be a network device, and the receiving end device may be a terminal device. When the method is applied to D2D or V2X, the transmitting end device may be a first terminal device, the receiving end device may be a second terminal device, and the first terminal device communicates with the second terminal device through D2D or V2X.

Description is made below by taking the method being applied to the communication system shown in FIG. 1 as an example.

Optionally, in an embodiment of the present application, the first transmission window is a discovery reference signal transmission window, and the first transmission window is one of at least one discovery reference signal transmission window in one discovery reference signal period.

It should be understood that there may be at least one discovery reference signal transmission window within one discovery reference signal (DRS) period. For example, one DRS period is 80ms, and there may be multiple 10ms DRS transmission windows in this DRS period.

It should be noted that the first indication information and the second indication information are combined to indicate a position index of an SSB actually transmitted in the first transmission window.

Optionally, the first transmission window may be a resource on an unlicensed spectrum.

Optionally, in an embodiment of the present application, the Y candidate SSB transmission positions may be divided into N1 SSB groups, and each SSB group includes N2 candidate SSB transmission positions, N1 and N2 being positive integers.

Optionally, in an embodiment of the present application, the transmitting end device may directly indicate an SSB group in which a first SSB actually transmitted is located. Preferably, the transmitting end device sends third indication information consisting of M3 bits to the receiving end device. The third indication information is used for indicating a first SSB group. The first SSB group is an SSB group in which the first SSB actually transmitted is located. At this time, the receiving end device may determine, based on the third indication information, from which SSB group the transmitting end device starts to transmit an SSB.

Specifically, the transmitting end device sends the third indication information to the receiving end device through one of broadcasting, Downlink Control Information (DCI) and Radio Resource Control (RRC) signaling.

For example, the transmitting end device sends the third indication information to the receiving end device through a broadcast System Information Block 1 (SIB 1), i.e., the third indication information is carried in the SIB 1.

Optionally, M3=log₂N1 or *M*3 = ┌log₂ *N*1┐, wherein ┌ ┐ means rounding up.

Optionally, in an embodiment of the present application, the receiving end device may also determine, based on a detected SSB index, from which SSB group the transmitting end device starts to transmit an SSB.

Optionally, in an embodiment of the present application, the first indication information and the second indication information may specifically indicate a position index of an SSB actually transmitted within the first transmission window in a mode of the following examples.

Example one: the first indication information indicates, with an M1-bit bitmap, a number of SSBs and position indexes of the SSBs actually transmitted in the first SSB group and the second SSB group, and the second indication information indicates, with M2 bits, that a first SSB actually transmitted is located at a k-th candidate SSB transmission position in the first SSB group. The second SSB group is a next group of the first SSB group, and k is a positive integer less than or equal to N2.

Optionally, in the example one, if M1=N2, the first indication information specifically indicates, with an M1-bit bitmap, a number of SSBs and position indexes of the SSBs actually transmitted at a k-th to an N2-th candidate SSB transmission positions in the first SSB group, and a number of SSBs and position indexes of the SSBs actually transmitted at a first to a (k-1)-th candidate SSB transmission positions in the second SSB group.

Further, in the example one, if M1=N2, the first indication information specifically indicates the number of the SSBs and the position indexes of the SSBs actually transmitted at the k-th to the N2-th candidate SSB transmission positions in the first SSB group with a k-th to an M1-th bits in the M1-bit bitmap, and indicates the number of the SSBs and the position indexes of the SSBs actually transmitted at the first to the (k-1)-th candidate SSB transmission positions in the second SSB group with a first to a (k-1)-th bits in the M1-bit bitmap.

Furthermore, in the example one, if M1=N2 and k=1, the first indication information specifically indicates the number of the SSBs and the position indexes of the SSBs actually transmitted at the first to the N2-th candidate SSB transmission positions in the first SSB group with the first to the M1-th bits in the M1-bit bitmap.

Optionally, in the example one, if M1=N2-1, the first indication information includes a first subsection and a second subsection. The first subsection consists of a k-th to an M1-th bits in the first indication information, and the second subsection consists of a first to a (k-1)-th bits in the first indication information. A bitmap of the first subsection indicates a number of SSBs and position indexes of the SSBs actually transmitted at a (k+1)-th to an N2-th candidate SSB transmission positions in the first SSB group; and a bitmap of the second subsection indicates a number of SSBs and position indexes of the SSBs actually transmitted at a first to a (k-1)-th candidate SSB transmission positions in the second SSB group.

Further, in the example one, if M1=N2-1 and k=1, the bitmap of the first subsection specifically indicates the number of the SSBs and the position indexes of the SSBs actually transmitted at the second to the N2-th candidate SSB transmission positions in the first SSB group.

Optionally, in the example one, M2=log₂N2.

Optionally, in the example one, the first SSB group is indicated by the third indication information.

Optionally, in the example one, the receiving end device may determine the first SSB group based on a detected SSB index.

Example two: the first indication information indicates, with an M1-bit bitmap, a number of SSBs and position indexes of the SSBs actually transmitted at M1 candidate SSB transmission positions starting from a candidate SSB transmission position at which a first SSB actually transmitted is located, and the second indication information indicates, with M2 bits, that the first SSB actually transmitted is located at a k-th candidate SSB transmission position in the first SSB group, M1=N2 and k being a positive integer less than or equal to N2.

Optionally, in the example two, M2=log₂N2.

Optionally, in the example two, the first SSB group is indicated by the third indication information.

Optionally, in the example two, the receiving end device may determine the first SSB group based on a detected SSB index.

Example three: the first indication information indicates, with an M1-bit bitmap, a number of SSBs and position indexes of the SSBs actually transmitted at M1 candidate SSB transmission positions after a candidate SSB transmission position at which a first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

Optionally, in the example three, M2=log₂N2.

Optionally, in the example three, the first SSB group is indicated by the third indication information.

Optionally, in the example three, the receiving end device may determine the first SSB group based on a detected SSB index.

Example four: the first indication information indicates a number of SSBs actually transmitted with M1 bits, and the SSBs actually transmitted occupy continuous candidate SSB transmission positions; and the second indication information indicates that a first SSB actually transmitted is located at a k-th candidate SSB transmission position in the first SSB group with M2 bits, k being a positive integer less than or equal to N2.

Optionally, in the example four, M1=log₂X.

Optionally, in the example four, M2=log₂N2.

Optionally, in the example four, the first SSB group is indicated by the third indication information.

Optionally, in the example four, the receiving end device may determine the first SSB group based on a detected SSB index.

Example five: the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located.

Optionally, in the example five, M1=M2=N2-1.

It should be noted that in the example five, the receiving end device may detect the SSB currently transmitted.

Example six: the first indication information indicates a number of SSBs continuously transmitted before a candidate SSB transmission position at which an SSB currently transmitted is located with M1 bits, including the SSB currently transmitted; and the second indication information indicates a number of SSBs continuously transmitted after the candidate SSB transmission position at which the SSB currently transmitted is located with M2 bits, including the SSB currently transmitted.

Optionally, in the example six, M1=M2=log₂X.

It should be noted that in the example six, the receiving end device may detect the SSB currently transmitted.

Optionally, in an embodiment of the present application, values of Y, N1 and N2 may be as follows:
Y is 16, N1 is 4, and N2 is 4; or Y is 16, N1 is 2, and N2 is 8; or Y is 32, N1 is 8, and N2 is 4; or Y is 32, N1 is 4, and N2 is 8; or Y is 32, N1 is 2, and N2 is 16; or Y is 64, N1 is 16, and N2 is 4; or Y is 64, N1 is 8, and N2 is 8; or Y is 64, N1 is 4, and N2 is 16; or Y is 64, N1 is 2, and N2 is 32.

Optionally, in an embodiment of the present application, X is 8, or X is 4.

Optionally, in an embodiment of the present application, the transmitting end device may send the first indication information to the receiving end device through one of broadcasting, DCI, or RRC signaling. For example, the transmitting end device sends the first indication information to the receiving end device through a broadcast SIB 1.

Optionally, in an embodiment of the present application, the transmitting end device may send the second indication information to the receiving end device through one of broadcasting, DCI, or RRC signaling. For example, the transmitting end device sends the second indication information to the receiving end device through DCI.

Optionally, in an embodiment of the present application, the first indication information and the second indication information may be integrated in one piece of information for transmission, for example, through a broadcast SIB1. Optionally, in an embodiment of the present application, the second indication information and the third indication information may be integrated in one piece of information for transmission, for example, through DCI. Optionally, in an embodiment of the present application, the first indication information, the second indication information and the third indication information may be integrated in one piece of information for transmission, and a transmission mode may be any one of broadcasting, DCI, or RRC signaling.

Below, a signal transmission method 200 according to an embodiment of the present application will be described in detail with reference to FIGS. 3 to 9. Specifically, detailed description may be made corresponding to embodiments one to seven respectively. In the embodiments one to seven, taking the transmitting end device being a base station and the receiving end device being a UE as an example for specific description, and in which a case where Y=32, X=8, and SSB associated indexes are 0-31, N1=4 and N2=8 is taken as an example.

Optionally, as embodiment one, a first transmission window includes four SSB groups which are SSB group 0 to SSB group 3 as shown in FIG. 3. Each SSB group includes 8 candidate SSB transmission positions, which are candidate SSB transmission position 0 to candidate SSB transmission position 7. The first indication information consists of M1=8 bits, and the second indication information consists of M2=3 bits. Specifically, the first indication information indicates a number of SSBs and position indexes of the SSBs actually transmitted at a k-th to an N2-th candidate SSB transmission positions in the first SSB group with a k-th to an M1-th bits in a 8-bit bitmap, and indicates a number of SSBs and position indexes of the SSBs actually transmitted at a first to a (k-1)-th candidate SSB transmission positions in the second SSB group with a first to a (k-1)-th bits in an M1-bit bitmap; and the second indication information indicates that a first SSB actually transmitted is located at a k-th candidate SSB transmission position in the first SSB group with 3 bits.

It should be noted that when a bit in the 8-bit bitmap used by the first indication information is set to "1", an SSB is transmitted at a candidate SSB transmission position corresponding to the bit among the 8 candidate SSB transmission positions in the group. For example, when a second bit in the 8-bit bitmap is set to "1", an SSB is transmitted at a second candidate SSB transmission position among the candidate SSB transmission positions in the group.

In the embodiment one, the first SSB group is an SSB group in which the first SSB actually transmitted is located, and the second SSB group is the next group of the first SSB group.

Optionally, the first SSB group may be indicated by a base station. For example, the base station may send third indication information indicating the first SSB group to a UE through one of broadcasting, DCI, or RRC signaling.

Optionally, the first SSB group may also be determined by a UE based on a detected SSB index.

Specifically, as shown in FIG. 3, the first SSB group is SSB group 1, and the second SSB group is SSB group 2.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 3, M2=100, which indicates that the first SSB actually transmitted is located at a 5th candidate SSB transmission position in SSB group 1, i.e., k=5, and a corresponding SSB position index is 12.

It should be noted that 000 corresponds to k being 1, 001 corresponds to k being 2, and so on, and 111 corresponds to k being 8.

Specifically, as shown in FIG. 3, M1=1 1001010, and a 5th to an 8th bits in M1 indicate that a number of SSBs actually transmitted at a 5th to an 8th candidate SSB transmission positions in SSB group 1 is 2, and position indexes of the SSBs actually transmitted are 12 and 14; and a first to a 4th bits in M1 indicate that a number of SSBs actually transmitted at a first to a 4th candidate SSB transmission positions in SSB group 2 is 2, and position indexes of the SSBs actually transmitted are 16 and 17.

Optionally, in the embodiment one, the UE may determine, just based on M1 and M2, positions of SSBs actually transmitted by the base station within the first transmission window.

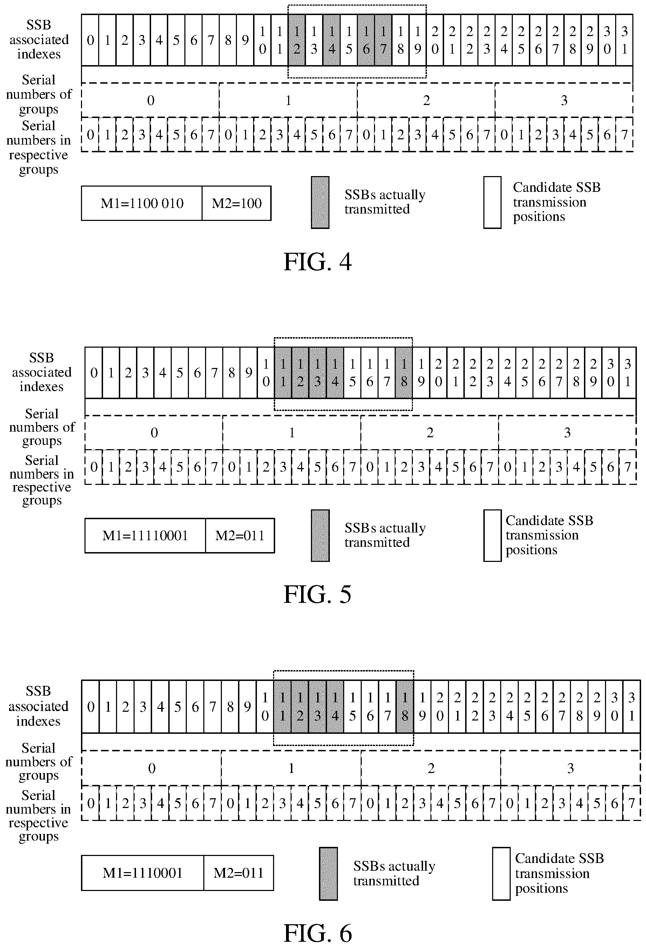

Optionally, as an embodiment two, a first transmission window includes four SSB groups which are SSB group 0 to SSB group 3 as shown in FIG. 4. Each SSB group includes 8 candidate SSB transmission positions, which are candidate SSB transmission position 0 to candidate SSB transmission position 7. The first indication information consists of M1=7 bits, and the second indication information consists of M2=3 bits. Specifically, the first indication information includes a first subsection and a second subsection. The first subsection consists of a k-th to a 7th bits in the first indication information, and the second subsection consists of a first to a (k-1)-th bits in the first indication information. A bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group. The second indication information indicates that the first SSB actually transmitted is located at a k-th candidate SSB transmission position in the first SSB group with 3 bits.

It should be noted that when a bit in a 7-bit bitmap used by the first indication information is set to "1", an SSB is transmitted at a candidate SSB transmission position corresponding to the bit.

In the embodiment two, the first SSB group is an SSB group in which the first SSB actually transmitted is located, and the second SSB group is the next group of the first SSB group.

Optionally, the first SSB group may be indicated by a base station. For example, the base station may send third indication information indicating the first SSB group to the UE through one of broadcasting, DCI, or RRC signaling.

Optionally, the first SSB group may also be determined by the UE based on a detected SSB index.

Specifically, as shown in FIG. 4, the first SSB group is SSB group 1, and the second SSB group is SSB group 2.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 4, M2=100, which indicates that the first SSB actually transmitted is located at a 5th candidate SSB transmission position in SSB group 1, i.e., k=5, and a corresponding SSB position index is 12. It should be noted that 000 corresponds to k being 1, 001 corresponds to k being 2, and so on, and 111 corresponds to k being 8.

Specifically, as shown in FIG. 4, M1=1100010, the first subsection consists of a 5th to a 7th bits in M1, i.e., the first subsection=010. The first subsection indicates that a number of SSBs actually transmitted at a 6th to an 8th candidate SSB transmission positions in SSB group 1 is 1, and a position index of the SSB actually transmitted is 14. The second subsection consists of a first to a 4th bits in M1, i.e., the second subsection=1100. The second subsection indicates that a number of SSBs actually transmitted at a first to a 4th candidate SSB transmission positions in SSB group 2 is 2, and position indexes of the SSBs actually transmitted are 16 and 17.

Optionally, in the embodiment two, the UE may determine, just based on M1 and M2, positions of SSBs actually transmitted by the base station within the first transmission window.

Optionally, as an embodiment three, the first transmission window includes four SSB groups, which are SSB group 0 to SSB group 3 as shown in FIG. 5. Each SSB group includes 8 candidate SSB transmission positions, which are candidate SSB transmission position 0 to candidate SSB transmission position 7. The first indication information consists of M1=8 bits, and the second indication information consists of M2=3 bits. Specifically, the first indication information indicates, with an 8-bit bitmap, a number of SSBs and position indexes of the SSBs actually transmitted at 8 candidate SSB transmission positions starting from a candidate SSB transmission position at which the first SSB actually transmitted is located, and the second indication information indicates, with 3 bits, that a first SSB actually transmitted is located at a k-th candidate SSB transmission position in the first SSB group.

It should be noted that the first indication information indicates, with the 8-bit bitmap, the number of the SSBs and the position indexes of the SSBs actually transmitted at the 8 candidate SSB transmission positions starting from the candidate SSB transmission position at which the first SSB actually transmitted by the base station is located. For example, when the 8-bit bitmap is set to "11110001", an SSB transmission situation at the 8 candidate SSB transmission positions starting from the candidate SSB transmission position at which the first SSB actually transmitted by the base station is located is as follows: first, there are SSB transmissions at four continuous candidate SSB transmission positions, then there are no SSB transmissions at three candidate SSB transmission positions, and then there is a further SSB transmission at a candidate SSB transmission position.

In the embodiment three, the first SSB group is an SSB group in which the first SSB actually transmitted is located.

Optionally, the first SSB group may be indicated by a base station. For example, the base station may send third indication information indicating the first SSB group to the UE through one of broadcasting, DCI, or RRC signaling. Optionally, the first SSB group may also be determined by the UE based on a detected SSB index. Specifically, as shown in FIG. 5, the first SSB group is SSB group 1.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 5, M2=011, which indicates that the first SSB actually transmitted is located at a 4th candidate SSB transmission position in SSB group 1, i.e., k=4, and a corresponding SSB position index is 11. It should be noted that 000 corresponds to k being 1, 001 corresponds to k being 2, and so on, and 111 corresponds to k being 8.

Specifically, as shown in FIG. 5, M1=11110001, and the first indication information indicates, with a 8-bit bitmap, that the number of the SSBs actually transmitted at the 8 candidate SSB transmission positions starting from a candidate SSB transmission position at which the first SSB actually transmitted is located is 5, and the position indexes of the SSBs are 11, 12, 13, 14 and 18.

Optionally, in the embodiment three, the UE may determine, just based on M1 and M2, positions of SSBs actually transmitted by the base station within the first transmission window.

Optionally, as an embodiment four, the first transmission window includes four SSB groups, which are SSB group 0 to SSB group 3 as shown in FIG. 6. Each SSB group includes 8 candidate SSB transmission positions, which are candidate SSB transmission position 0 to candidate SSB transmission position 7. The first indication information consists of M1=7 bits, and the second indication information consists of M2=3 bits. Specifically, the first indication information indicates, with a 7-bit bitmap, a number of SSBs and position indexes of the SSBs actually transmitted at 7 candidate SSB transmission positions after a candidate SSB transmission position at which a first SSB actually transmitted is located, and the second indication information indicates, with 3 bits, that the first SSB actually transmitted is located at a k-th candidate SSB transmission position in the first SSB group.

It should be noted that the first indication information indicates, with the 7-bit bitmap, the number of the SSBs and the position indexes of the SSBs actually transmitted at the 7 candidate SSB transmission positions after the candidate SSB transmission position at which the first SSB actually transmitted by the base station is located. For example, when the 7-bit bitmap is set to "1110001", an SSB transmission situation at the 7 candidate SSB transmission positions after the candidate SSB transmission position at which the first SSB actually transmitted by the base station is located is as follows: first, there are SSB transmissions at three continuous candidate SSB transmission positions, then there are no SSB transmissions at three candidate SSB transmission positions, and then there is a further SSB transmission at a candidate SSB transmission position.

In the embodiment four, the first SSB group is an SSB group in which the first SSB actually transmitted is located.

Optionally, the first SSB group may be indicated by a base station. For example, the base station may send third indication information indicating the first SSB group to the UE through one of broadcasting, DCI, or RRC signaling.

Optionally, the first SSB group may also be determined by the UE based on a detected SSB index. Specifically, as shown in FIG. 6, the first SSB group is SSB group 1.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 6, M2=011, which indicates that the first SSB actually transmitted is located at a 4th candidate SSB transmission position in SSB group 1, i.e., k=4, and a corresponding SSB position index is 11.

It should be noted that 000 corresponds to k being 1, 001 corresponds to k being 2, and so on, and 111 corresponds to k being 8.

Specifically, as shown in FIG. 6, M1=1110001, and the first indication information indicates, with a 7-bit bitmap, that the number of the SSBs actually transmitted at 7 candidate SSB transmission positions after the candidate SSB transmission position at which the first SSB actually transmitted is located is 4, and the position indexes of the SSBs are 12, 13, 14 and 18.

Optionally, in the embodiment four, the UE may determine, just based on M1 and M2, positions of SSBs actually transmitted by the base station within the first transmission window.

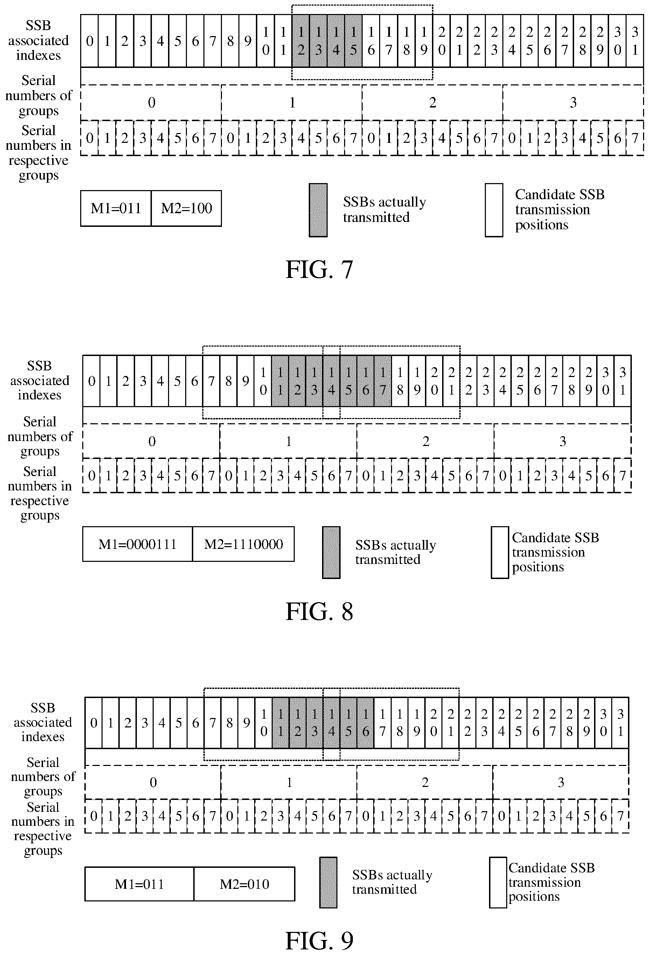

Optionally, as an embodiment five, the first transmission window includes four SSB groups, which are SSB group 0 to SSB group 3 as shown in FIG. 7. Each SSB group includes 8 candidate SSB transmission positions, which are candidate SSB transmission position 0 to candidate SSB transmission position 7. The first indication information consists of M1=3 bits, and the second indication information consists of M2=3 bits. Specifically, the first indication information indicates a number of SSBs actually transmitted with 3 bits, and the SSBs actually transmitted occupy continuous candidate SSB transmission positions, and the second indication information indicates, with 3 bits, that the first SSB actually transmitted is located at a k-th candidate SSB transmission position in the first SSB group.

Optionally, M1=log₂X, i.e., M1=log₂8=3. Optionally, M2=log₂N2, i.e., M2=log₂8=3.

In the embodiment five, the first SSB group is an SSB group in which the first SSB actually transmitted is located.

Optionally, the first SSB group may be indicated by a base station. For example, the base station may send third indication information indicating the first SSB group to the UE through one of broadcasting, DCI, or RRC signaling. Optionally, the first SSB group may also be determined by the UE based on a detected SSB index. Specifically, as shown in FIG. 7, the first SSB group is SSB group 1.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 7, M2=100, which indicates that the first SSB actually transmitted is located at a 4th candidate SSB transmission position in SSB group 1, i.e., k=5, and a corresponding SSB position index is 12.

It should be noted that 000 corresponds to k being 1, 001 corresponds to k being 2, and so on, and 111 corresponds to k being 8.

Specifically, as shown in FIG. 7, M1=011, and the first indication information indicates, with 3 bits, that the number of the SSBs actually transmitted is 4, and the indexes of continuous candidate SSB transmission positions occupied by the SSBs actually transmitted are 12 to 15.

Optionally, in the embodiment five, the UE may determine, just based on M1 and M2, positions of SSBs actually transmitted by the base station within the first transmission window.

Optionally, as an embodiment six, the first transmission window includes four SSB groups, which are SSB group 0 to SSB group 3 as shown in FIG. 8. Each SSB group includes 8 candidate SSB transmission positions, which are candidate SSB transmission position 0 to candidate SSB transmission position 7. The first indication information consists of M1=7 bits, and the second indication information consists of M2=7 bits. Specifically, the first indication information indicates, with a 7-bit bitmap, a number of SSBs and position indexes of the SSBs actually transmitted at 7 candidate SSB transmission positions before a candidate SSB transmission position at which an SSB currently transmitted is located, and the second indication information indicates, with a 7-bit bitmap, a number of SSBs and position indexes of the SSBs actually transmitted at 7 candidate SSB transmission positions after the candidate SSB transmission position at which the SSB currently transmitted is located. Optionally, M1=M2=N2-1.

It should be noted that the first indication information indicates, with the 7-bit bitmap, the number of the SSBs and the position indexes of the SSBs actually transmitted at the 7 candidate SSB transmission positions before the SSB currently transmitted. For example, when the 7-bit bitmap is set to "0000111", an SSB transmission situation at the 7 candidate SSB transmission positions before the current SSB transmission position is as follows: first, there are no SSB transmissions at four continuous candidate SSB transmission positions, and then there are SSB transmissions at three candidate SSB transmission positions. Similarly, the second indication information indicates, with the 7-bit bitmap, the number of the SSBs and the position indexes of the SSBs actually transmitted at the 7 candidate SSB transmission positions after the SSB currently transmitted,. For example, when the 7-bit bitmap is set to "1110000", an SSB transmission situation at the 7 candidate SSB transmission positions after the current SSB transmission position is as follows: first, there are SSB transmissions at three continuous candidate SSB transmission positions, and then there are no SSB transmissions at four candidate SSB positions.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 8, the UE detects that the index of the SSB currently transmitted is 14, the M1=0000111 bitmap indicates that the number of the SSBs actually transmitted at the 7 candidate SSB transmission positions before the candidate SSB transmission position at which the SSB currently transmitted is located is 3, and the position indexes of the SSBs are 11, 12 and 13; and the M2=1 110000 bitmap indicates that the number of the SSBs actually transmitted at the 7 candidate SSB transmission positions after the candidate SSB transmission position at which the SSB currently transmitted is located is 3, and the position indexes of the SSBs are 15, 16 and 17.

Optionally, in the embodiment six, the UE may determine, just based on M1 and M2, positions of SSBs actually transmitted by the base station within the first transmission window.

Optionally, as an embodiment seven, the first transmission window includes four SSB groups, which are SSB group 0 to SSB group 3 as shown in FIG. 9. Each SSB group includes 8 candidate SSB transmission positions, which are candidate SSB transmission position 0 to candidate SSB transmission position 7. The first indication information consists of M1=3 bits, and the second indication information consists of M2=3 bits. Specifically, the first indication information indicates a number of SSBs continuously transmitted before an candidate SSB transmission position at which an SSB currently transmitted is located with 3 bits, including the SSB currently transmitted, and the second indication information indicates a number of SSBs continuously transmitted after the candidate SSB transmission position at which the SSB currently transmitted is located with 3 bits, including the SSB currently transmitted. Optionally, M1=M2=log₂X=log₂8=3.

It should be noted that from which SSB group the base station starts to transmit an SSB depends on a configuration of the base station. For example, in an unlicensed frequency band, the base station may transmit an SSB at a first candidate SSB transmission position after obtaining an available channel.

Specifically, as shown in FIG. 9, the UE detects that the index of the SSB currently transmitted is 14, and M1=011 indicates that the number of SSBs continuously transmitted before the candidate SSB transmission position at which the SSB currently transmitted is located, including the SSB currently transmitted is 4, that is, M1 indicates that the position indexes of the SSBs transmitted are 11 to 14; M2=010 indicates that the number of SSBs continuously transmitted after the candidate SSB transmission position at which the SSB currently transmitted is located, including the SSB currently transmitted is 3, that is, M2 indicates that the position indexes of the SSBs transmitted are 14 to 16.

Optionally, in the embodiment seven, the UE may determine, just based on M1 and M2, positions of SSBs actually transmitted by the base station within the first transmission window.

It should be understood that in the embodiments of the present application, operations such as rate matching may be performed after the receiving end device knows an actual transmission position of an SSB, or after the receiving end device receives an SSB.

Therefore, in the embodiments of the present application, the transmitting end device may use a small bitmap to indicate a position of an SSB actually transmitted within a transmission window of a DRS for the receiving end device to perform rate matching, etc.

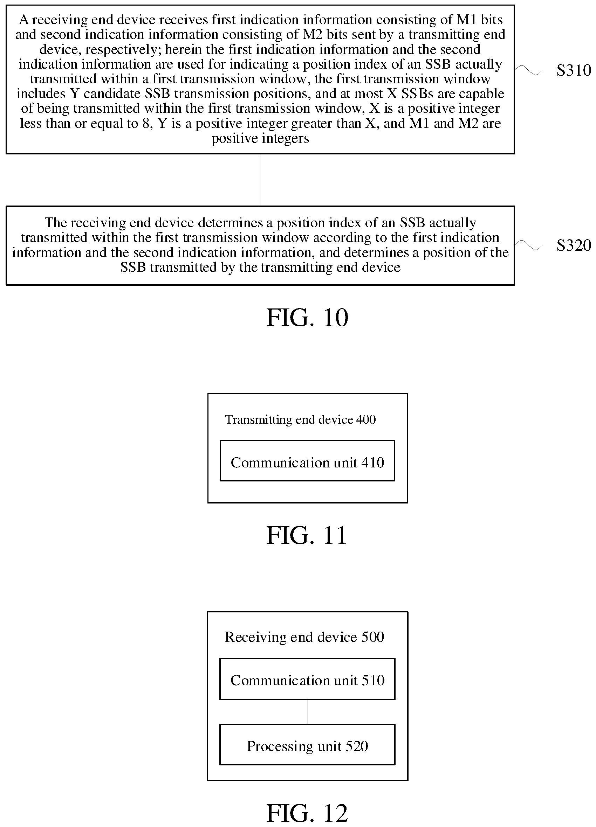

FIG. 10 is a schematic flow chart of a signal transmission method 300 according to an embodiment of the present application. As shown in FIG. 10, the method 300 may include acts S310 and S320.

In act S310, a receiving end device receives first indication information consisting of M1 bits and second indication information consisting of M2 bits sent by a transmitting end device, respectively. The first indication information and the second indication information are used for indicating a position index of an SSB actually transmitted within a first transmission window, herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers.

In act S320, the receiving end device determines the position index of the SSB actually transmitted within the first transmission window according to the first indication information and the second indication information, and determines the position of the SSB transmitted by the transmitting end device.

Optionally, the receiving end device may be a terminal device, and the transmitting end device may be a network device.

Optionally, in an embodiment of the present application, the first transmission window is a discovery reference signal transmission window, and the first transmission window is one of at least one discovery reference signal transmission window in one discovery reference signal period.

Optionally, the Y candidate SSB transmission positions are divided into N1 SSB groups, and each SSB group includes N2 candidate SSB transmission positions, N1 and N2 being positive integers.

Optionally, in an embodiment of the present application, the transmitting end device may directly indicate an SSB group in which a first SSB actually transmitted is located. Preferably, the receiving end device receives third indication information consisting of M3 bits sent by the transmitting end device. The third indication information is used for indicating a first SSB group. The first SSB group is an SSB group in which the first SSB actually transmitted is located. At this time, the receiving end device may determine, based on the third indication information, from which SSB group the transmitting end device starts to transmit an SSB.

Specifically, the transmitting end device sends the third indication information to the receiving end device through one of broadcasting, DCI, or RRC signaling

For example, the transmitting end device sends the third indication information to the receiving end device through a broadcast SIB 1, i.e., the third indication information is carried in the SIB1.

Optionally, M3=log₂N1 or *M*3 = ┌log₂ *N*1┐, wherein ┌ ┐ means rounding up.

Optionally, in an embodiment of the present application, the receiving end device may also determine, based on a detected SSB index, from which SSB group the transmitting end device starts to transmit an SSB.

Optionally, in an embodiment of the present application, the first indication information and the second indication information may specifically indicate a position index of an SSB actually transmitted within the first transmission window in a mode of the following examples.

Example one: the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group. The second SSB group is a next group of the first SSB group, and k is a positive integer less than or equal to N2.

Optionally, in the example one, if M1=N2, the first indication information specifically indicates, with an M1-bit bitmap, a number of SSBs and position indexes of the SSBs actually transmitted at a k-th to an N2-th candidate SSB transmission positions in the first SSB group, and indicates a number of SSBs and position indexes of the SSBs actually transmitted at a first to a (k-1)-th candidate SSB transmission positions in the second SSB group.

Further, in the example one, if M1=N2, the first indication information specifically indicates the number of the SSBs and the position indexes of the SSBs actually transmitted at the k-th to the N2-th candidate SSB transmission positions in the first SSB group with a k-th to an M1-th bits in the M1-bit bitmap,, and indicates the number of the SSBs and the position indexes of the SSBs actually transmitted at the first to the k-1-th candidate SSB transmission positions in the second SSB group with a first to a (k-1)-th bits in the M1-bit bitmap.

Furthermore, in the example one, if M1=N2 and k=1, the first indication information specifically indicates the number of the SSBs and the position indexes of the SSBs actually transmitted at the first to the N2-th candidate SSB transmission positions in the first SSB group with the first to the M1-th bits in the M1-bit bitmap.

Optionally, in the example one, if M1=N2-1, the first indication information includes a first subsection and a second subsection. The first subsection consists of a k-th to an M1-th bits in the first indication information, and the second subsection consists of a first to a (k-1)-th bits in the first indication information. A bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

Further, in the example one, if M1=N2-1 and k=1, the bitmap of the first subsection specifically indicates the number of the SSBs and the position indexes of the SSBs actually transmitted at the second to the N2-th candidate SSB transmission positions in the first SSB group.

Optionally, in the example one, M2=log₂N2. Optionally, in the example one, the first SSB group is indicated by the third indication information. Optionally, in the example one, the receiving end device may determine the first SSB group based on a detected SSB index.

Example two: the first indication information indicates, with an M1-bit bitmap, a number of SSBs and position indexes of the SSBs actually transmitted at M1 candidate SSB transmission positions starting from a candidate SSB transmission position at which a first SSB actually transmitted is located, and the second indication information indicates, with M2 bits, that the first SSB actually transmitted is located at a k-th candidate SSB transmission position in the first SSB group, M1=N2 and k being a positive integer less than or equal to N2.

Optionally, in the example two, M2=log₂N2. Optionally, in the example two, the first SSB group is indicated by the third indication information. Optionally, in the example two, the receiving end device may determine the first SSB group based on a detected SSB index.

Example three: the first indication information indicates, with an M1-bit bitmap, a number of SSBs and position indexes of the SSBs actually transmitted at M1 candidate SSB transmission positions after a candidate SSB transmission position at which a first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

Optionally, in the example three, M2=log₂N2. Optionally, in the example three, the first SSB group is indicated by the third indication information. Optionally, in the example three, the receiving end device may determine the first SSB group based on a detected SSB index.

Example four: the first indication information indicates a number of SSBs actually transmitted with M1 bits, and the SSBs actually transmitted occupy continuous candidate SSB transmission positions; and the second indication information indicates, with M2 bits, that the first SSB actually transmitted is located at a k-th candidate SSB transmission position in the first SSB group, k being a positive integer less than or equal to N2.

Optionally, in the example four, M1=log₂X. Optionally, in the example four, M2=log₂N2.

Optionally, in the example four, the first SSB group is indicated by the third indication information.

Optionally, in the example four, the receiving end device may determine the first SSB group based on a detected SSB index.

Example five: the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located,. Optionally, in the example five, M1=M2=N2-1. It should be noted that in the example five, the receiving end device may detect the SSB currently transmitted.

Example six: the first indication information indicates a number of SSBs continuously transmitted before a candidate SSB transmission position at which an SSB currently transmitted is located with M1 bits, including the SSB currently transmitted; and the second indication information indicates a number of SSBs continuously transmitted after the candidate SSB transmission position at which the SSB currently transmitted is located with M2 bits, including the SSB currently transmitted.

Optionally, in the example six, M1=M2=log₂X. It should be noted that in the example six, the receiving end device may detect the SSB currently transmitted.

Optionally, in an embodiment of the present application, the values of Y, N1 and N2 may be as follows:
Y is 16, N1 is 4, and N2 is 4; or Y is 16, N1 is 2, and N2 is 8; or Y is 32, N1 is 8, and N2 is 4; or Y is 32, N1 is 4, and N2 is 8; or Y is 32, N1 is 2, and N2 is 16; or Y is 64, N1 is 16, and N2 is 4; or Y is 64, N1 is 8, and N2 is 8; or Y is 64, N1 is 4, and N2 is 16; or Y is 64, N1 is 2, and N2 is 32.

Optionally, in an embodiment of the present application, X is 8, or X is 4.

Optionally, in an embodiment of the present application, the transmitting end device may send the first indication information to the receiving end device through one of broadcasting, DCI, or RRC signaling. For example, the receiving end device receives the first indication information sent by the transmitting end device through the broadcast SIB 1.

Optionally, in an embodiment of the present application, the transmitting end device may send the second indication information to the receiving end device through one of broadcasting, DCI, or RRC signaling. For example, the receiving end device receives the second indication information sent by the transmitting end device through the broadcast SIB 1.

Optionally, in an embodiment of the present application, the first indication information and the second indication information may be integrated in one piece of information for transmission, for example, through the broadcast SIB1. Optionally, in an embodiment of the present application, the second indication information and the third indication information may be integrated in one piece of information for transmission, for example, through DCI. Optionally, in an embodiment of the present application, the first indication information, the second indication information and the third indication information may be integrated in one piece of information for transmission, and the transmission mode may be any one of broadcasting, DCI, or RRC signaling.

It should be understood that acts in the signal transmission method 300 may be referred to the corresponding acts in the signal transmission method 200, which will not be repeated here for brevity.

FIG. 11 is a schematic block diagram of a transmitting end device 400 according to an embodiment of the present application. As shown in FIG. 11, the transmitting end device 400 includes a communication unit 410 configured to send first indication information consisting of M1 bits and second indication information consisting of M2 bits to a receiving end device, respectively. The first indication information and the second indication information are used for indicating a position index of an SSB actually transmitted within a first transmission window, herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers.

Optionally, the Y candidate SSB transmission positions are divided into N1 SSB groups, and each SSB group includes N2 candidate SSB transmission positions, N1 and N2 being positive integers.

Optionally, the communication unit 410 is further configured to send third indication information consisting of M3 bits to the receiving end device. The third indication information is used for indicating a first SSB group. The first SSB group is an SSB group in which a first SSB actually transmitted is located.

Optionally, the first indication information indicates, with an M1-bit bitmap, a number of SSBs and position indexes of the SSBs actually transmitted in the first SSB group and the second SSB group, and the second indication information indicates, with M2 bits, that a first SSB actually transmitted is located at a k-th candidate SSB transmission position in the first SSB group. The second SSB group is a next group of the first SSB group, and k is a positive integer less than or equal to N2.

Optionally, M1=N2, the first indication information specifically indicates, with an M1-bit bitmap, a number of SSBs and position indexes of the SSBs actually transmitted at a k-th to an N2-th candidate SSB transmission positions in the first SSB group, and indicates a number of SSBs and position indexes of the SSBs actually transmitted at a first to a (k-1)-th candidate SSB transmission positions in the second SSB group.

Optionally, the first indication information specifically indicates the number of the SSBs and the position indexes of the SSBs actually transmitted at the k-th to the N2-th candidate SSB transmission positions in the first SSB group with a k-th to an M1-th bits in the M1-bit bitmap, and indicates the number of the SSBs and the position indexes of the SSBs actually transmitted at the first to the (k-1)-th candidate SSB transmission positions in the second SSB group with a first to a (k-1)-th bits in the M1-bit bitmap.

Optionally, if k=1, the first indication information specifically indicates the number of the SSBs and the position indexes of the SSBs actually transmitted at the first to the N2-th candidate SSB transmission positions in the first SSB group with the first to the M1-th bits in the M1-bit bitmap.

Optionally, M1=N2-1, and the first indication information includes a first subsection and a second subsection. The first subsection consists of a k-th to an M1-th bits in the first indication information, and the second subsection consists of a first to a (k-1)-th bits in the first indication information. A bitmap of the first subsection indicates a number of SSBs and position indexes of the SSBs actually transmitted at a (k+1)-th to an N2-th candidate SSB transmission positions in the first SSB group; and a bitmap of the second subsection indicates a number of SSBs and position indexes of the SSBs actually transmitted at a first to a (k-1)-th candidate SSB transmission positions in the second SSB group.

Optionally, if k=1, the bitmap of the first subsection specifically indicates the number of SSBs and the position indexes of the SSBs actually transmitted at the second to the N2-th candidate SSB transmission positions in the first SSB group.

Optionally, the first indication information indicates, with an M1-bit bitmap, a number of SSBs and position indexes of the SSBs actually transmitted at M1 candidate SSB transmission positions starting from a candidate SSB transmission position at which a first SSB actually transmitted is located; and the second indication information indicates, with M2 bits, that the first SSB actually transmitted is located at a k-th candidate SSB transmission position in the first SSB group, M1=N2 and k being a positive integer less than or equal to N2.

Optionally, the first indication information indicates, with an M1-bit bitmap, a number of SSBs and position indexes of the SSBs actually transmitted at M1 candidate SSB transmission positions after a candidate SSB transmission position at which a first SSB actually transmitted is located, and the second indication information indicates, with M2 bits, that the first SSB actually transmitted is located at the k-th candidate SSB transmission position in the first SSB group, M1=N2-1 and k being a positive integer less than or equal to N2.

Optionally, the first indication information indicates a number of SSBs actually transmitted with M1 bits, and the SSBs actually transmitted occupy continuous candidate SSB transmission positions; and the second indication information indicates, with M2 bits, that the first SSB actually transmitted is located at the k-th candidate SSB transmission position in the SSB group currently transmitted, k being a positive integer less than or equal to N2.

Optionally, M1=log₂X. Optionally, M2=log₂N2. Optionally, M3=log₂N1 or M3 = ┌log₂ *N*1┐.

Optionally, the communication unit 410 is specifically configured to send the third indication information to the receiving end device through one of broadcasting, DCI, or RRC signaling.

Optionally, the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located. Optionally, M1=M2=N2-1.

Optionally, the first indication information indicates a number of SSBs continuously transmitted before a candidate SSB transmission position at which an SSB currently transmitted is located with M1 bits, including the SSB currently transmitted; and the second indication information indicates a number of SSBs continuously transmitted after the candidate SSB transmission position at which the SSB currently transmitted is located with M2 bits, including the SSB currently transmitted. Optionally, M1=M2=log₂X.

Optionally, Y is 16, N1 is 4, and N2 is 4; or Y is 16, N1 is 2, and N2 is 8; or Y is 32, N1 is 8, and N2 is 4; or Y is 32, N1 is 4, and N2 is 8; or Y is 32, N1 is 2, and N2 is 16; or Y is 64, N1 is 16, and N2 is 4; or Y is 64, N1 is 8, and N2 is 8; or Y is 64, N1 is 4, and N2 is 16; or Y is 64, N1 is 2, and N2 is 32. Optionally, X is 8, or X is 4.

Optionally, the first transmission window is a discovery reference signal transmission window, and the first transmission window is one of at least one discovery reference signal transmission window in one discovery reference signal period.

Optionally, the communication unit 410 is specifically configured to send the first indication information to the receiving end device through one of broadcasting, DCI, or RRC signaling. Optionally, the communication unit 410 is specifically configured to send the second indication information to the receiving end device through one of broadcasting, DCI, or RRC signaling. Optionally, the transmitting end device 400 is a network device.

It should be understood that the transmitting end device 400 according to an embodiment of the present application may correspond to the transmitting end device in the method embodiment of the present application, and the above and other operations and/or functions of various units in the transmitting end device 400 are respectively for implementing the corresponding flows of the transmitting end device in the method 200 shown in FIG. 2, which will not be repeated here for the sake of brevity.

FIG. 12 is a schematic block diagram of a receiving end device 500 according to an embodiment of the present application. As shown in FIG. 12, the receiving end device 500 includes a communication unit 510 and a processing unit 520.

The communication unit 510 is configured to receive first indication information consisting of M1 bits and second indication information consisting of M2 bits sent by a transmitting end device, respectively. The first indication information and the second indication information are used for indicating a position index of a Synchronization Signal Block (SSB) actually transmitted within a first transmission window, herein the first transmission window includes Y candidate SSB transmission positions, and at most X SSBs are capable of being transmitted within the first transmission window, X is a positive integer less than or equal to 8, Y is a positive integer greater than X, and M1 and M2 are positive integers.

The processing unit 520 is configured to determine the position index of the SSB actually transmitted within the first transmission window according to the first indication information and the second indication information, and determine a position of the SSB transmitted by the transmitting end device.

Optionally, the Y candidate SSB transmission positions are divided into N1 SSB groups, and each SSB group includes N2 candidate SSB transmission positions, N1 and N2 being positive integers.

Optionally, the communication unit is further configured to receive third indication information consisting of M3 bits sent by the transmitting end device. The third indication information is used for indicating a first SSB group. Herein, the first SSB group is an SSB group in which a first SSB actually transmitted is located.

The processing unit 520 is specifically configured to determine position indexes of SSBs actually transmitted within the first transmission window according to the first indication information, the second indication information and the third indication information.

Optionally, the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group. The second SSB group is a next group of the first SSB group, and k is a positive integer less than or equal to N2.

Optionally, M1=N2, the first indication information specifically indicates, with an M1-bit bitmap, a number of SSBs and position indexes of the SSBs actually transmitted at a k-th to an N2-th candidate SSB transmission positions in the first SSB group, and indicates the number of SSBs and position indexes of the SSBs actually transmitted at a first to a (k-1)-th candidate SSB transmission positions in the second SSB group.

Optionally, the first indication information specifically indicates the number of the SSBs and the position indexes of the SSBs actually transmitted at the k-th to the N2-th candidate SSB transmission positions in the first SSB group with a k-th to an M1-th bits in the M1-bit bitmap, and indicates the number of the SSBs and the position indexes of the SSBs actually transmitted at the first to the (k-1)-th candidate SSB transmission positions in the second SSB group with a first to a (k-1)-th bits in the M1-bit bitmap.

Optionally, if k=1, the first indication information specifically indicates, with the first to the M1-th bits in the M1-bit bitmap, the number of the SSBs and the position indexes of the SSBs actually transmitted at the first to the N2-th candidate SSB transmission positions in the first SSB group.

Optionally, M1=N2-1, the first indication information includes a first subsection and a second subsection. The first subsection consists of a k-th to an M1-th bits in the first indication information, and the second subsection consists of a first to a (k-1)-th bits in the first indication information. A bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

Optionally, if k=1, the bitmap of the first subsection specifically indicates the number of the SSBs and the position indexes of the SSBs actually transmitted at the second to the N2-th candidate SSB transmission positions in the first SSB group.

Optionally, the first indication information indicates a number of SSBs and position indexes of the SSBs actually transmitted at M1 candidate SSB transmission positions starting from a candidate SSB transmission position at which a first SSB actually transmitted is located with an M1-bit bitmap, and the second indication information indicates that the first SSB actually transmitted is located at a k-th candidate SSB transmission position in the first SSB group with M2 bits, k being a positive integer less than or equal to N2.

Optionally, the first indication information indicates a number of SSBs and position indexes of the SSBs actually transmitted at M1 candidate SSB transmission positions after a candidate SSB transmission position at which a first SSB actually transmitted is located with an M1-bit bitmap, and the second indication information indicates, with M2 bits, that the first SSB actually transmitted is located at a k-th candidate SSB transmission position in the first SSB group, M1=N2-1 and k being a positive integer less than or equal to N2.

Optionally, the first indication information indicates a number of SSBs actually transmitted with M1 bits, and the SSBs actually transmitted occupy continuous candidate SSB transmission positions; and the second indication information indicates, with M2 bits, that the first SSB actually transmitted is located at a k-th candidate SSB transmission position in the first SSB group, k being a positive integer less than or equal to N2.

Optionally, M1=log₂X. Optionally, M2=log₂N2. Optionally, M3=log₂N1 or M3 = ┌log₂ *N*1┐.

Optionally, the communication unit 510 is specifically configured to receive the third indication information sent by the transmitting end device through one of broadcasting, DCI and RRC signaling.

Optionally, the first indication information indicates a number of SSBs and position indexes of the SSBs actually transmitted at M1 candidate SSB transmission positions before a candidate SSB transmission position at which an SSB currently transmitted is located with an M1-bit bitmap, and the second indication information indicates a number of SSBs and position indexes of the SSBs actually transmitted at M2 candidate SSB transmission positions after the candidate SSB transmission position at which the SSB currently transmitted is located with an M2-bit bitmap. Optionally, M1=M2=N2-1.

Optionally, the first indication information indicates a number of SSBs continuously transmitted before a candidate SSB transmission position at which an SSB currently transmitted is located with M1 bits, including the SSB currently transmitted; and the second indication information indicates a number of SSBs continuously transmitted after the candidate SSB transmission position at which the SSB currently transmitted is located with M2 bits, including the SSB currently transmitted. Optionally, M1=M2=log₂X.

Optionally, Y is 16, N1 is 4, and N2 is 4; or Y is 16, N1 is 2, and N2 is 8; or Y is 32, N1 is 8, and N2 is 4; or Y is 32, N1 is 4, and N2 is 8; or Y is 32, N1 is 2, and N2 is 16; or Y is 64, N1 is 16, and N2 is 4; or Y is 64, N1 is 8, and N2 is 8; or Y is 64, N1 is 4, and N2 is 16; or Y is 64, N1 is 2, and N2 is 32.

Optionally, X is 8, or X is 4.

Optionally, the first transmission window is a discovery reference signal transmission window, and the first transmission window is one of at least one discovery reference signal transmission window in one discovery reference signal period.

Optionally, the communication unit 510 is specifically configured to receive the first information sent by the transmitting end device through one of broadcasting, DCI, or RRC signaling. Optionally, the communication unit 510 is specifically configured to receive the second information sent by the transmitting end device through one of broadcasting, DCI, or RRC signaling. Optionally, the receiving end device 500 is a terminal device.

It should be understood that the receiving end device 500 according to an embodiment of the present application may correspond to the receiving end device in the method embodiment of the present application, and the above and other operations and/or functions of various units in the receiving end device 500 are respectively for implementing corresponding flows of the receiving end device in the method 300 shown in FIG. 10, which will not be repeated here for brevity.

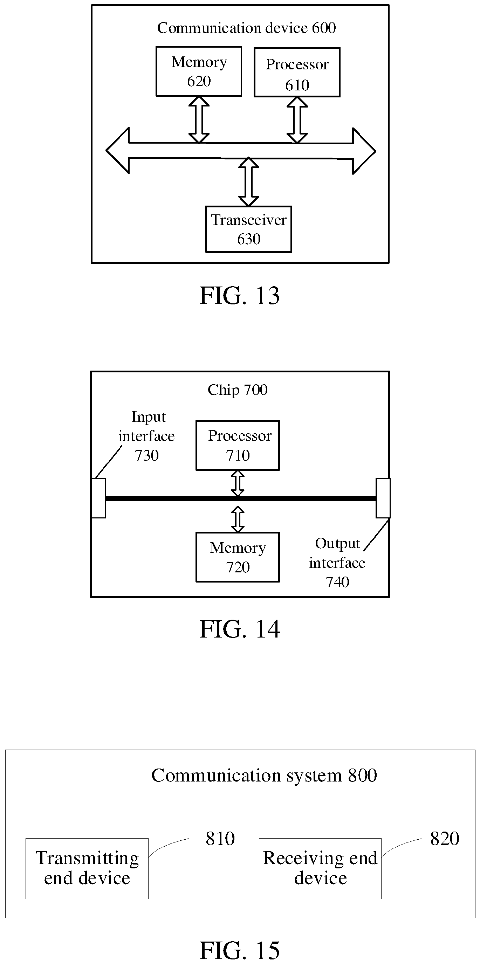

FIG. 13 is a schematic structural diagram of a communication device 600 according to an embodiment of the present application. The communication device 600 shown in FIG. 13 includes a processor 610. The processor 610 may call and run a computer program from a memory to implement the method in an embodiment of the present application.

Optionally, as shown in FIG. 13, the communication device 600 may further include a memory 620. The processor 610 may call and run a computer program from the memory 620 to implement the method in an embodiment of the present application.

Herein, the memory 620 may be a separate device independent of the processor 610 or may be integrated in the processor 610.

Optionally, as shown in FIG. 13, the communication device 600 may further include a transceiver 630, and the processor 610 may control the transceiver 630 to communicate with other devices. Specifically, the transceiver 630 may send information or data to other devices or receive information or data sent by other devices.

Herein, the transceiver 630 may include a transmitter and a receiver. The transceiver 630 may further include an antenna, and a quantity of antennas may be one or more.

Optionally, the communication device 600 may be specifically a transmitting end device of an embodiment of the present application, and the communication device 600 may implement corresponding flows implemented by the transmitting end device in various methods of the embodiments of the present application, which will not be repeated here for brevity.

Optionally, the communication device 600 may be specifically a receiving end device of an embodiment of the present application, and the communication device 600 may implement corresponding flows implemented by the receiving end device in various methods of the embodiments of the present application, which will not be repeated here for brevity.

FIG. 14 is a schematic diagram of a structure of a chip according to an embodiment of the present application. A chip 700 shown in FIG. 14 includes a processor 710. The processor 710 may call and run a computer program from a memory to implement the methods in the embodiments of the present application.

Optionally, as shown in FIG. 14, the chip 700 may further include a memory 720. The processor 710 may call and run a computer program from the memory 720 to implement the methods in the embodiments of the present application.

Herein, the memory 720 may be a separate device independent of the processor 710 or may be integrated in the processor 710.

Optionally, the chip 700 may further include an input interface 730. The processor 710 may control the input interface 730 to communicate with other device or chip, and specifically, may acquire information or data sent by other device or chip.

Optionally, the chip 700 may further include an output interface 740. The processor 710 may control the output interface 740 to communicate with other device or chip, and specifically, may output information or data to other device or chip.

Optionally, the chip may be applied to a transmitting end device of an embodiment of the present application, and the chip may implement corresponding flows implemented by the transmitting end device in various methods of the embodiments of the present application, which will not be repeated here for brevity.

Optionally, the chip may be applied to a receiving end device of an embodiment of the present application, and the chip may implement corresponding flows implemented by the receiving end device in various methods of the embodiments of the present application, which will not be repeated here for brevity.

It should be understood that the chip mentioned in the embodiments of the present application may also be referred to as a system-level chip, a system chip, a chip system or a system-on-chip, etc.

FIG. 15 is a schematic block diagram of a communication system 800 according to an embodiment of the present application. As shown in FIG. 15, the communication system 800 includes a transmitting end device 810 and a receiving end device 820.

Herein, the transmitting end device 810 may be configured to implement corresponding functions implemented by the transmitting end device in the above-mentioned methods, and the receiving end device 820 may be configured to implement corresponding functions implemented by the receiving end device in the above-mentioned methods, which will not be repeated here for brevity.

It should be understood that the processor in the embodiment of the present application may be an integrated circuit chip having a signal processing capability. In an implementation process, steps of the foregoing method embodiments may be implemented by an integrated logic circuit of hardware in the processor or instructions in a form of software. The processor may be a general purpose processor, a Digital Signal Processor (DSP), an Application Specific Integrated Circuit (ASIC), a Field Programmable Gate Array (FPGA) or other programmable logic devices, a discrete gate or a transistor logic device, or a discrete hardware component. The processor may implement or execute methods, acts and logical block diagrams disclosed in the embodiments of the present application. The general purpose processor may be a microprocessor, or the processor may be any conventional processor or the like. The acts of the methods disclosed with reference to the embodiments of the present application may be directly implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads the information in the memory and completes the acts of the above methods in combination with its hardware.

It may be understood that the memory in the embodiments of the present application may be a transitory memory or a non-transitory memory, or may include both a transitory memory and a non-transitory memory. The non-transitory memory may be a Read-Only Memory (ROM), a Programmable ROM (PROM), an Erasable PROM (EPROM), an Electrically EPROM (EEPROM), or a flash memory. The transitory memory may be a Random Access Memory (RAM) which serves as an external cache. By way of illustrative but not restrictive description, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory in the systems and methods described here is intended to include, without being limited to, these and any other suitable types of memory.

It should be understood that the above memory is an example for illustration, but not for limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, memories in the embodiments of the present application are intended to include, without being limited to, these and any other suitable types of memories.

An embodiment of the present application further provides a computer readable storage medium for storing a computer program.

Optionally, the computer readable storage medium may be applied to a transmitting end device of an embodiment of the present application, and the computer program causes a computer to perform corresponding flows implemented by the transmitting end device in various methods of the embodiments of the present application, which will not be repeated here for brevity.

Optionally, the computer readable storage medium may be applied to a receiving end device of an embodiment of the present application, and the computer program causes a computer to perform corresponding flows implemented by the receiving end device in various methods of the embodiments of the present application, which will not be repeated here for brevity.

An embodiment of the present application also provides a computer program product including computer program instructions.

Optionally, the computer program product may be applied to a transmitting end device of an embodiment of the present application, and the computer program instructions cause a computer to perform corresponding flows implemented by the transmitting end device in various methods of the embodiments of the present application, which will not be repeated here for brevity.

Optionally, the computer program product may be applied to a receiving end device of an embodiment of the present application, and the computer program instructions cause a computer to perform corresponding flows implemented by the receiving end device in various methods of the embodiments of the present application, which will not be repeated here for brevity.

An embodiment of the present application also provides a computer program.

Optionally, the computer program may be applied to a transmitting end device of an embodiment of the present application. When being run on a computer, the computer program causes the computer to execute corresponding processes implemented by the transmitting end device in various methods of the embodiments of the present application, which will not be repeated here for brevity.

Optionally, the computer program may be applied to a receiving end device of an embodiment of the present application. When being run on a computer, the computer program causes the computer to execute corresponding processes implemented by the receiving end device in various methods of the embodiments of the present application, which will not be repeated here for brevity.

Those of ordinary skills in the art may recognize that the example units and algorithm steps described in combination with the embodiments disclosed herein may be implemented in electronic hardware, or a combination of computer software and electronic hardware. Whether these functions are implemented in hardware or software depends on a specific application and design constraints of the technical solutions. Professional technicians may use different methods to implement the described functions in respect to each particular application, but such implementation should not be considered to be beyond the scope of the present application.

Those skilled in the art may clearly understand that for convenience and conciseness of description, as to specific working processes of the systems, apparatuses and units described above, reference may be made to the corresponding processes in the method embodiments, which will not be repeated here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division modes in actual implementation, for example, multiple units or components may be combined or integrated into another system, or some features may be ignored or not executed. On the other hand, the displayed or discussed mutual coupling or direct coupling or communication connection may be indirect coupling or communication connection through some interfaces. The indirect couplings or communication connections between apparatuses or units may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the objectives of the solutions of the embodiments.

In addition, various functional units in various embodiments of the present application may be integrated in one processing unit, or the various units may be physically present separately, or two or more units may be integrated in one unit.

When the functions are implemented in the form of software functional units and sold or used as an independent product, the software functional units may be stored in a computer-readable storage medium. Based on such an understanding, the technical solution of the present application, in essence, or the part contributing to the prior art, or the part of the technical solution, may be embodied in the form of a software product stored in a storage medium. The computer software product is stored in a storage medium and includes several instructions for instructing a computer device (which may be a personal computer, a server, a network device or the like) to perform all or part of the acts of the methods described in various embodiments of the present application. The foregoing storage medium includes various mediums capable of storing program codes, such as a USB flash disk, a removable hard disk, a Read-Only Memory (ROM), a Random Access Memory (RAM), a magnetic disk, or an optical disk.

The foregoing descriptions are merely specific implementations of the present application, but are not intended to limit the protection scope of the present application. Any variation or substitution readily conceived by a person skilled in the art within the technical scope disclosed by the present application shall fall within the protection scope of the present application. Therefore, the protection scope of the present application shall be subject to the protection scope of the claims.

## Claims

1. A signal transmission method, comprising:
sending, by a transmitting end device, first indication information consisting of M1 bits and second indication information consisting of M2 bits to a receiving end device, respectively; wherein the first indication information and the second indication information are used for indicating a position index of a Synchronization Signal Block (SSB) actually transmitted within a first transmission window, the first transmission window comprises Y candidate SSB transmission positions, and at most X SSBs are capable of being transmitted within the first transmission window, X is a positive integer less than or equal to 8, Y is a positive integer greater than X, and M1 and M2 are positive integers.

2. The method of claim 1, wherein the Y candidate SSB transmission positions are divided into N1 SSB groups, and each SSB group comprises N2 candidate SSB transmission positions, N1 and N2 being positive integers.

3. The method of claim 2, further comprising:
sending, by the transmitting end device, third indication information consisting of M3 bits to the receiving end device, wherein the third indication information is used for indicating a first SSB group, and the first SSB group is an SSB group in which a first SSB actually transmitted is located.

4. The method of claim 3, wherein
the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group, wherein the second SSB group is a next group of the first SSB group, and k is a positive integer less than or equal to N2.

5. The method of claim 4, wherein M1=N2, and the first indication information specifically indicates, with the M1-bit bitmap, a number of SSBs and position indexes of the SSBs actually transmitted at a k-th to an N2-th candidate SSB transmission positions in the first SSB group, and indicates a number of SSBs and position indexes of the SSBs actually transmitted at a first to a (k-1)-th candidate SSB transmission positions in the second SSB group.

6. The method of claim 5, wherein the first indication information specifically indicates, with a k-th to an M1-th bits in the M1-bit bitmap, the number of the SSBs and the position indexes of the SSBs actually transmitted at the k-th to the N2-th candidate SSB transmission positions in the first SSB group, and indicates, with a first to a (k-1)-th bits in the M1-bit bitmap, the number of the SSBs and the position indexes of the SSBs actually transmitted at the first to the (k-1)-th candidate SSB transmission positions in the second SSB group.

7. The method of claim 5 or 6, wherein if k=1, the first indication information specifically indicates, with a first to an M1-th bits in the M1-bit bitmap, the number of the SSBs and the position indexes of the SSBs actually transmitted at the first to the N2-th candidate SSB transmission positions in the first SSB group.

8. The method of claim 4, wherein M1=N2-1, the first indication information comprises a first subsection and a second subsection, the first subsection consists of a k-th to an M1-th bits in the first indication information, and the second subsection consists of a first to a (k-1)-th bits in the first indication information, wherein a bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

9. The method of claim 8, wherein if k=1, the bitmap of the first subsection specifically indicates the number of the SSBs and the position indexes of the SSBs actually transmitted at the second to the N2-th candidate SSB transmission positions in the first SSB group.

10. The method of claim 3, wherein the first indication information indicates, with an M1-bit bitmap, a number of SSBs and position indexes of the SSBs actually transmitted at M1 candidate SSB transmission positions starting from a candidate SSB transmission position at which the first SSB actually transmitted is located, and the second indication information indicates, with M2 bits, that the first SSB actually transmitted is located at a k-th candidate SSB transmission position in the first SSB group, M1=N2 and k being a positive integer less than or equal to N2.

11. The method of claim 3, wherein the first indication information indicates, with an M1-bit bitmap, a number of SSBs and position indexes of the SSBs actually transmitted at M1 candidate SSB transmission positions after a candidate SSB transmission position at which the first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

12. The method of claim 3, wherein the first indication information indicates, with M1 bits, a number of SSBs actually transmitted, and the SSBs actually transmitted occupy continuous candidate SSB transmission positions, and the second indication information indicates, with M2 bits, that the first SSB actually transmitted is located at a k-th candidate SSB transmission position in an SSB group currently transmitted, k being a positive integer less than or equal to N2.

13. The method of claim 12, wherein M1=log₂X.

14. The method of any one of claims 4-13, wherein M2=log₂N2.

15. The method of any one of claims 3-14, wherein M3=log₂N1 or *M*3 = ┌log₂ *N*1┐.

16. The method of any one of claims 3-15, wherein sending, by the transmitting end device, third indication information consisting of M3 bits to the receiving end device comprises:
sending, by the transmitting end device, the third indication information to the receiving end device through one of broadcasting, Downlink Control Information (DCI), or Radio Resource Control (RRC) signaling.

17. The method of claim 2, wherein the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located.

18. The method of claim 17, wherein M1=M2=N2-1.

19. The method of claim 2, wherein the first indication information indicates, with M1 bits, a number of SSBs continuously transmitted before a candidate SSB transmission position at which an SSB currently transmitted is located, comprising the SSB currently transmitted, and the second indication information indicates, with M2 bits, a number of SSBs continuously transmitted after the candidate SSB transmission position at which the SSB currently transmitted is located, comprising the SSB currently transmitted.

20. The method of claim 19, wherein M1=M2=log₂X.

21. The method of any one of claims 2-20, wherein
Y is 16, N1 is 4, and N2 is 4; or
Y is 16, N1 is 2, and N2 is 8; or
Y is 32, N1 is 8, and N2 is 4; or
Y is 32, N1 is 4, and N2 is 8; or
Y is 32, N1 is 2, and N2 is 16; or
Y is 64, N1 is 16, and N2 is 4; or
Y is 64, N1 is 8, and N2 is 8; or
Y is 64, N1 is 4, and N2 is 16; or
Y is 64, N1 is 2, and N2 is 32.

22. The method of any one of claims 1-21, wherein X is 8, or X is 4.

23. The method of any one of claims 1-22, wherein the first transmission window is a discovery reference signal transmission window, and the first transmission window is one of at least one discovery reference signal transmission window within a discovery reference signal period.

24. The method of any one of claims 1-23, wherein sending, by the transmitting end device, the first indication information to the receiving end device comprises:
sending, by the transmitting end device, the first indication information to the receiving end device through one of broadcasting, DCI, or RRC signaling.

25. The method of any one of claims 1-24, wherein sending, by the transmitting end device, the second indication information to the receiving end device comprises:
sending, by the transmitting end device, the second indication information to the receiving end device through one of broadcasting, DCI, or RRC signaling.

26. A signal transmission method, comprising:
receiving, by a receiving end device, first indication information consisting of M1 bits and second indication information consisting of M2 bits sent by a transmitting end device, respectively; wherein the first indication information and the second indication information are used for indicating a position index of a Synchronization Signal Block (SSB) actually transmitted within a first transmission window, the first transmission window comprises Y candidate SSB transmission positions, and at most X SSBs are capable of being transmitted within the first transmission window, X is a positive integer less than or equal to 8, Y is a positive integer greater than X, and M1 and M2 are positive integers; and
determining, by the receiving end device, a position index of an SSB actually transmitted within the first transmission window according to the first indication information and the second indication information, and determining a position of an SSB transmitted by the transmitting end device.

27. The method of claim 26, wherein the Y candidate SSB transmission positions are divided into N1 SSB groups, and each SSB group comprises N2 candidate SSB transmission positions, N1 and N2 being positive integers.

28. The method of claim 27, further comprising:
receiving, by the receiving end device, third indication information consisting of M3 bits sent by the transmitting end device, wherein the third indication information is used for indicating a first SSB group, and the first SSB group is an SSB group in which a first SSB actually transmitted is located;
determining, by the receiving end device, the position index of the SSB actually transmitted within the first transmission window according to the first indication information and the second indication information comprises:
determining, by the receiving end device, the position index of the SSB actually transmitted within the first transmission window according to the first indication information, the second indication information and the third indication information.

29. The method of claim 28, wherein the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group, wherein the second SSB group is a next group of the first SSB group, and k is a positive integer less than or equal to N2.

30. The method of claim 29, wherein M1=N2, the first indication information specifically indicates, with the M1-bit bitmap, a number of SSBs and position indexes of the SSBs actually transmitted at a k-th to an N2-th candidate SSB transmission positions in the first SSB group, and indicates a number of SSBs and position indexes of the SSBs actually transmitted at a first to a (k-1)-th candidate SSB transmission positions in the second SSB group.

31. The method of claim 30, wherein the first indication information specifically indicates, with a k-th to an M1-th bits in the M1-bit bitmap, the number of the SSBs and the position indexes of the SSBs actually transmitted at the k-th to the N2-th candidate SSB transmission positions in the first SSB group, and indicates, with the first to the (k-1)-th bits in the M1-bit bitmap, the number of the SSBs and position indexes of the SSBs actually transmitted at the first to the (k-1)-th candidate SSB transmission positions in the second SSB group.

32. The method of claim 30 or 31, wherein if k=1, the first indication information specifically indicates, with a first to an M1-th bits in the M1-bit bitmap, the number of the SSBs and the position indexes of the SSBs actually transmitted at the first to the N2-th candidate SSB transmission positions in the first SSB group.

33. The method of claim 29, wherein M1=N2-1, the first indication information comprises a first subsection and a second subsection, the first subsection consists of a k-th to an M1-th bits in the first indication information, the second subsection consists of a first to a (k-1)-th bits in the first indication information, wherein a bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

34. The method of claim 33, wherein if k=1, the bitmap of the first subsection specifically indicates the number of the SSBs and the position indexes of the SSBs actually transmitted at the second to the N2-th candidate SSB transmission positions in the first SSB group.

35. The method of claim 28, wherein the first indication information indicates, with an M1-bit bitmap, a number of SSBs and position indexes of the SSBs actually transmitted at M1 candidate SSB transmission positions starting from a candidate SSB transmission position at which the first SSB actually transmitted is located, and the second indication information indicates, with M2 bits, that the first SSB actually transmitted is located at a k-th candidate SSB transmission position in the first SSB group, k being a positive integer less than or equal to N2.

36. The method of claim 28, wherein the first indication information indicates, with an M1-bit bitmap, a number of SSBs and position indexes of the SSBs actually transmitted at M1 candidate SSB transmission positions after a candidate SSB transmission position at which the first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

37. The method of claim 28, wherein the first indication information indicates, with M1 bits, a number of SSBs actually transmitted, and the SSBs actually transmitted occupy continuous candidate SSB transmission positions; and the second indication information indicates, with M2 bits, that the first SSB actually transmitted is located at a k-th candidate SSB transmission position in the first SSB group, k being a positive integer less than or equal to N2.

38. The method of claim 37, wherein M1=log₂X.

39. The method of any one of claims 28-38, wherein M2=log₂N2.

40. The method of any one of claims 28-39, wherein M3=log₂N1 or *M*3 = ┌log₂ *N*1┐.

41. The method of any one of claims 28-40, wherein receiving, by the receiving end device, third indication information consisting of M3 bits sent by the transmitting end device comprises:
receiving, by the receiving end device, the third indication information sent by the transmitting end device through one of broadcasting, Downlink Control Information (DCI), or Radio Resource Control (RRC) signaling.

42. The method of claim 27, wherein the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located.

43. The method of claim 42, wherein M1=M2=N2-1.

44. The method of claim 27, wherein the first indication information indicates, with M1 bits, a number of SSBs continuously transmitted before a candidate SSB transmission position at which an SSB currently transmitted is located, comprising the SSB currently transmitted, and the second indication information indicates, with M2 bits, a number of SSBs continuously transmitted after the candidate SSB transmission position at which the SSB currently transmitted is located, comprising the SSB currently transmitted.

45. The method of claim 44, wherein M1=M2=log₂X.

46. The method of any one of claims 27-45, wherein
Y is 16, N1 is 4, and N2 is 4; or
Y is 16, N1 is 2, and N2 is 8; or
Y is 32, N1 is 8, and N2 is 4; or
Y is 32, N1 is 4, and N2 is 8; or
Y is 32, N1 is 2, and N2 is 16; or
Y is 64, N1 is 16, and N2 is 4; or
Y is 64, N1 is 8, and N2 is 8; or
Y is 64, N1 is 4, and N2 is 16; or
Y is 64, N1 is 2, and N2 is 32.

47. The method of any one of claims 26-46, wherein X is 8, or X is 4.

48. The method of any one of claims 26-47, wherein the first transmission window is a discovery reference signal transmission window, and the first transmission window is one of at least one discovery reference signal transmission window within a discovery reference signal period.

49. The method of any one of claims 26-48, wherein receiving, by the receiving end device, the first indication information sent by the transmitting end device comprises:
receiving, by the receiving end device, the first information sent by the transmitting end device through one of broadcasting, DCI, or RRC signaling.

50. The method of any one of claims 26-49, wherein receiving, by the receiving end device, the second indication information sent by the transmitting end device comprises:
receiving, by the receiving end device, the second information sent by the transmitting end device through one of broadcasting, DCI, or RRC signaling.

51. A transmitting end device, comprising:
a communication unit, configured to send first indication information consisting of M1 bits and second indication information consisting of M2 bits to a receiving end device, respectively; wherein the first indication information and the second indication information are used for indicating a position index of a Synchronization Signal Block (SSB) actually transmitted within a first transmission window, the first transmission window comprises Y candidate SSB transmission positions, and at most X SSBs are capable of being transmitted within the first transmission window, X is a positive integer less than or equal to 8, Y is a positive integer greater than X, and M1 and M2 are positive integers.

52. The transmitting end device of claim 51, wherein the Y candidate SSB transmission positions are divided into N1 SSB groups, and each SSB group comprises N2 candidate SSB transmission positions, N1 and N2 being positive integers.

53. The transmitting end device of claim 52, wherein the communication unit is further configured to send third indication information consisting of M3 bits to the receiving end device, wherein the third indication information is used for indicating a first SSB group, and the first SSB group is an SSB group in which a first SSB actually transmitted is located.

54. The transmitting end device of claim 53, wherein the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group, wherein the second SSB group being a next group of the first SSB group, and k being a positive integer less than or equal to N2.

55. The transmitting end device of claim 54, wherein M1=N2, the first indication information specifically indicates, with the M1-bit bitmap, a number of SSBs and position indexes of the SSBs actually transmitted at a k-th to an N2-th candidate SSB transmission positions in the first SSB group, and indicates a number of SSBs and position indexes of the SSBs actually transmitted at a first to a (k-1)-th candidate SSB transmission positions in the second SSB group.

56. The transmitting end device of claim 55, wherein the first indication information specifically indicates, with a k-th to an M1-th bits in the M1-bit bitmap, the number of the SSBs and the position indexes of the SSBs actually transmitted at the k-th to the N2-th candidate SSB transmission positions in the first SSB group, and indicates, with a first to a (k-1)-th bits in the M1-bit bitmap, the number of the SSBs and the position indexes of the SSBs actually transmitted at the first to the (k-1)-th candidate SSB transmission positions in the second SSB group.

57. The transmitting end device of claim 55 or 56, wherein if k=1, the first indication information specifically indicates, with a first to an M1-th bits in the M1-bit bitmap, the number of the SSBs and the position indexes of the SSBs actually transmitted at the first to the N2-th candidate SSB transmission positions in the first SSB group.

58. The transmitting end device of claim 54, wherein M1=N2-1, the first indication information comprises a first subsection and a second subsection, the first subsection consists of a k-th to an M1-th bits in the first indication information, the second subsection consists of a first to a (k-1)-th bits in the first indication information, wherein a bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

59. The transmitting end device of claim 58, wherein if k=1, the bitmap of the first subsection specifically indicates the number of the SSBs and the position indexes of the SSBs actually transmitted at the second to the N2-th candidate SSB transmission positions in the first SSB group.

60. The transmitting end device of claim 53, wherein the first indication information indicates, with an M1-bit bitmap, a number of SSBs and position indexes of the SSBs actually transmitted at M1 candidate SSB transmission positions starting from a candidate SSB transmission position at which the first SSB actually transmitted is located, and the second indication information indicates, with M2 bits, that the first SSB actually transmitted is located at a k-th candidate SSB transmission position in the first SSB group, M1=N2 and k being a positive integer less than or equal to N2.

61. The transmitting end device of claim 53, wherein the first indication information indicates, with an M1-bit bitmap, a number of SSBs and position indexes of the SSBs actually transmitted at M1 candidate SSB transmission positions after a candidate SSB transmission position at which the first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

62. The transmitting end device of claim 53, wherein the first indication information indicates, with M1 bits, a number of SSBs actually transmitted, and the SSBs actually transmitted occupy continuous candidate SSB transmission positions, and the second indication information indicates, with M2 bits, that the first SSB actually transmitted is located at a k-th candidate SSB transmission position in the SSB group currently transmitted, k being a positive integer less than or equal to N2.

63. The transmitting end device of claim 62, wherein M1=log₂X.

64. The transmitting end device of any one of claims 54-63, wherein M2=log₂N2.

65. The transmitting end device of any one of claims 53-64, wherein M3=log₂N1 or M3 = ┌log₂ *N*1┐.

66. The transmitting end device of any one of claims 53-65, wherein the communication unit is specifically configured to:
send the third indication information to the receiving end device through one of broadcasting, Downlink Control Information (DCI), or Radio Resource Control (RRC) signaling.

67. The transmitting end device of claim 52, wherein the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located.

68. The transmitting end device of claim 67, wherein M1=M2=N2-1.

69. The transmitting end device of claim 52, wherein the first indication information indicates, with M1 bits, a number of SSBs continuously transmitted before a candidate SSB transmission position at which an SSB currently transmitted is located, comprising the SSB currently transmitted, and the second indication information indicates, with M2 bits, a number of SSBs continuously transmitted after the candidate SSB transmission position at which the SSB currently transmitted is located, comprising the SSB currently transmitted.

70. The transmitting end device of claim 69, wherein M1=M2=log₂X.

71. The transmitting end device of any one of claims 52-70, wherein
Y is 16, N1 is 4, and N2 is 4; or
Y is 16, N1 is 2, and N2 is 8; or
Y is 32, N1 is 8, and N2 is 4; or
Y is 32, N1 is 4, and N2 is 8; or
Y is 32, N1 is 2, and N2 is 16; or
Y is 64, N1 is 16, and N2 is 4; or
Y is 64, N1 is 8, and N2 is 8; or
Y is 64, N1 is 4, and N2 is 16; or
Y is 64, N1 is 2, and N2 is 32.

72. The transmitting end device of any one of claims 51-71, wherein X is 8, or X is 4.

73. The transmitting end device of any one of claims 51-72, wherein the first transmission window is a discovery reference signal transmission window, and the first transmission window is one of at least one discovery reference signal transmission window within a discovery reference signal period.

74. The transmitting end device of any one of claims 51-73, wherein the communication unit is specifically configured to:
send the first indication information to the receiving end device through one of broadcasting, DCI, or RRC signaling.

75. The transmitting end device of any one of claims 51-74, wherein the communication unit is specifically configured to:
send the second indication information to the receiving end device through one of broadcasting, DCI, or RRC signaling.

76. A receiving end device, comprising:
a communication unit, configured to receive first indication information consisting of M1 bits and second indication information consisting of M2 bits sent by a transmitting end device, respectively; wherein the first indication information and the second indication information are used for indicating a position index of a Synchronization Signal Block (SSB) actually transmitted within a first transmission window, the first transmission window comprises Y candidate SSB transmission positions, and at most X SSBs are capable of being transmitted within the first transmission window, X is a positive integer less than or equal to 8, Y is a positive integer greater than X, and M1 and M2 are positive integers; and
a processing unit, configured to determine a position index of an SSB actually transmitted within the first transmission window according to the first indication information and the second indication information, and determine a position of the SSB transmitted by the transmitting end device.

77. The receiving end device of claim 76, wherein the Y candidate SSB transmission positions are divided into N1 SSB groups, and each SSB group comprises N2 candidate SSB transmission positions, N1 and N2 being positive integers.

78. The receiving end device of claim 77, wherein the communication unit is further configured to receive third indication information consisting of M3 bits sent by the transmitting end device, wherein the third indication information is used for indicating a first SSB group, and the first SSB group is an SSB group in which a first SSB actually transmitted is located;
the processing unit is specifically configured to:
determine position indexes of the SSBs actually transmitted within the first transmission window according to the first indication information, the second indication information and the third indication information.

79. The receiving end device of claim 78, wherein the first indication information indicates, with an M1-bit bitmap, a number of SSBs and position indexes of the SSBs actually transmitted in the first SSB group and the second SSB group, and the second indication information indicates, with M2 bits, that the first SSB actually transmitted is located at a k-th candidate SSB transmission position in the first SSB group, wherein the second SSB group is a next group of the first SSB group, and k is a positive integer less than or equal to N2.

80. The receiving end device of claim 79, wherein M1=N2, and the first indication information specifically indicates, with an M1-bit bitmap, a number of SSBs and position indexes of the SSBs actually transmitted at a k-th to an N2-th candidate SSB transmission positions in the first SSB group, and a number of SSBs and position indexes of the SSBs actually transmitted at a first to a (k-1)-th candidate SSB transmission positions in the second SSB group.

81. The receiving end device of claim 80, wherein the first indication information specifically indicates, with a k-th to an M1-th bits in the M1-bit bitmap, the number of the SSBs and the position indexes of the SSBs actually transmitted at the k-th to the N2-th candidate SSB transmission positions in the first SSB group, and indicates, with a first to a (k-1)-th bits in the M1-bit bitmap, the number of the SSBs and the position indexes of the SSBs actually transmitted at the first to the (k-1)-th candidate SSB transmission positions in the second SSB group.

82. The receiving end device of claim 80 or 81, wherein if k=1, the first indication information specifically indicates, with a first to an M1-th bits in the M1-bit bitmap, the number of SSBs and the position indexes of the SSBs actually transmitted at the first to the N2-th candidate SSB transmission positions in the first SSB group.

83. The receiving end device of claim 79, wherein M1=N2-1, the first indication information comprises a first subsection and a second subsection, the first subsection consists of a k-th to an M1-th bits in the first indication information, the second subsection consists of a first to a (k-1)-th bits in the first indication information, wherein a bitmap of the first subsection indicates a number of SSBs and position indexes of the SSBs actually transmitted at a (k+1)-th to an N2-th candidate SSB transmission positions in the first SSB group, and a bitmap of the second subsection indicates a number of SSBs and position indexes of the SSBs actually transmitted at a first to a (k-1)-th candidate SSB transmission positions in the second SSB group.

84. The receiving end device of claim 83, wherein if k=1, the bitmap of the first subsection specifically indicates the number of SSBs and the position indexes of the SSBs actually transmitted at the second to the N2-th candidate SSB transmission positions in the first SSB group.

85. The receiving end device of claim 78, wherein the first indication information indicates, with an M1-bit bitmap, a number of SSBs and position indexes of the SSBs actually transmitted at M1 candidate SSB transmission positions starting from a candidate SSB transmission position at which the first SSB actually transmitted is located, and the second indication information indicates, with M2 bits, that the first SSB actually transmitted is located at a k-th candidate SSB transmission position in the first SSB group, k being a positive integer less than or equal to N2.

86. The receiving end device of claim 78, wherein the first indication information indicates, with an M1-bit bitmap, a number of SSBs and position indexes of the SSBs actually transmitted at M1 candidate SSB transmission positions after a candidate SSB transmission position at which a first SSB actually transmitted is located, and the second indication information indicates, with M2 bits, that the first SSB actually transmitted is located at a k-th candidate SSB transmission position in the first SSB group, M1=N2-1 and k being a positive integer less than or equal to N2.

87. The receiving end device of claim 78, wherein the first indication information indicates, with M1 bits, a number of SSBs actually transmitted, and the SSBs actually transmitted occupy continuous candidate SSB transmission positions, and the second indication information indicates, with M2 bits, that the first SSB actually transmitted is located at a k-th candidate SSB transmission position in the first SSB group, k being a positive integer less than or equal to N2.

88. The receiving end device of claim 87, wherein M1=log₂X.

89. The receiving end device of any one of claims 78-88, wherein M2=log₂N2.

90. The receiving end device of any one of claims 78-89, wherein M3=log₂N1 or M3 = ┌log₂ *N*1┐.

91. The receiving end device of any one of claims 78-90, wherein the communication unit is specifically configured to:
receive the third indication information sent by the transmitting end device through one of broadcasting, Downlink Control Information (DCI), or Radio Resource Control (RRC) signaling.

92. The receiving end device of claim 77, wherein the first indication information indicates, with an M1-bit bitmap, a number of SSBs and position indexes of the SSBs actually transmitted at M1 candidate SSB transmission positions before a candidate SSB transmission position at which an SSB currently transmitted is located, and the second indication information indicates, with an M2-bit bitmap, a number of SSBs and position indexes of the SSBs actually transmitted at M2 candidate SSB transmission positions after the candidate SSB transmission position at which the SSB currently transmitted is located.

93. The receiving end device of claim 92, wherein M1=M2=N2-1.

94. The receiving end device of claim 77, wherein the first indication information indicates, with M1 bits, a number of SSBs continuously transmitted before a candidate SSB transmission position at which an SSB currently transmitted is located, comprising the SSB currently transmitted, and the second indication information indicates, with M2 bits, a number of SSBs continuously transmitted after the candidate SSB transmission position at which the SSB currently transmitted is located, comprising the SSB currently transmitted.

95. The receiving end device of claim 94, wherein M1=M2=log₂X.

96. The receiving end device of any one of claims 77-95, wherein
Y is 16, N1 is 4, and N2 is 4; or
Y is 16, N1 is 2, and N2 is 8; or
Y is 32, N1 is 8, and N2 is 4; or
Y is 32, N1 is 4, and N2 is 8; or
Y is 32, N1 is 2, and N2 is 16; or
Y is 64, N1 is 16, and N2 is 4; or
Y is 64, N1 is 8, and N2 is 8; or
Y is 64, N1 is 4, and N2 is 16; or
Y is 64, N1 is 2, and N2 is 32.

97. The receiving end device of any one of claims 76-96, wherein X is 8, or X is 4.

98. The receiving end device of any one of claims 76-97, wherein the first transmission window is a discovery reference signal transmission window, and the first transmission window is one of at least one discovery reference signal transmission window within a discovery reference signal period.

99. The receiving end device of any one of claims 76-98, wherein the communication unit is specifically configured to:
receive the first information sent by the transmitting end device through one of broadcasting, DCI, or RRC signaling.

100. The receiving end device of any one of claims 76-99, wherein the communication unit is specifically configured to:
receive the second information sent by the transmitting end device through one of broadcasting, DCI, or RRC signaling.

101. A transmitting end device, comprising: a processor and a memory, wherein the memory is used for storing a computer program, and the processor is used for calling and running the computer program stored in the memory to implement the method of any one of claims 1-25.

102. A receiving end device, comprising: a processor and a memory, wherein the memory is used for storing a computer program, and the processor is used for calling and running the computer program stored in the memory to implement the method of any one of claims 26-50.

103. A chip, comprising: a processor for calling and running a computer program from a memory to enable a device mounted with the chip to implement the method of any one of claims 1-25.

104. A chip, comprising: a processor for calling and running a computer program from a memory to enable a device mounted with the chip to implement the method of any one of claims 26-50.

105. A computer-readable storage medium for storing a computer program that enables a computer to implement the method of any one of claims 1-25.

106. A computer-readable storage medium for storing a computer program that enables a computer to implement the method of any one of claims 26-50.

107. A computer program product comprising computer program instructions that enable a computer to implement the method of any one of claims 1-25.

108. A computer program product comprising computer program instructions that enable a computer to implement the method of any one of claims 26-50.

109. A computer program, wherein the computer program enables a computer to implement the method of any one of claims 1-25.

110. A computer program, wherein the computer program enables a computer to implement the method of any one of claims 26-50.
